# EUROPEAN PATENT APPLICATION

(11) **EP 2 988 211 A1**
(43) Date of publication of application: **24.02.2016**
(21) Application number: 13886121.6
(22) Date of filing: 31.05.2013
(51) Int. Cl.: G06F 9/455

(54) **APPLICATION DEPLOYMENT METHOD AND DEVICE**

(71) Applicant: Huawei Technologies Co., Ltd., Longgang District Shenzhen, Guangdong 518129 (CN)
(72) Inventor: ZHANG, Yi, Shenzhen Guangdong 518129 (CN); ZHANG, Chuxiong, Shenzhen Guangdong 518129 (CN); ZHU, Jie, Shenzhen Guangdong 518129 (CN)
(74) Representative: Thun, Clemens
(86) International application number: PCT/CN2013/076559
(87) International publication number: WO 2014/190544

(57) **Abstract**

The present invention provides an application deployment method and device. The method includes: receiving an application deployment request, where the request includes a resource package identifier of a resource package, at least one method artifact, a correspondence between each method artifact and each abstract method that is in a resource description file in the resource package, and method artifact information of each method artifact; acquiring the resource package according to the resource package identifier, where the resource package includes the resource description file and a deployment plan, the resource description file describes the abstract method, and the deployment plan referencs the abstract method; adding the method artifact information to the resource description file according to the correspondence between each method artifact and each abstract method that is in the resource description file in the resource package, to form an application deployment description file; and executing, according to the application deployment description file, the method artifact of the abstract method referenced by the deployment plan. The present invention improves expansibility of application deployment.

## Description

### TECHNICAL FIELD

The present invention relates to communications technologies, and in particular, to an application deployment method and device.

### BACKGROUND

Cloud computing is a service delivery and consumption mode. A cloud service provider (Cloud Service Provider, CSP for short) links cloud computing resources together by using a network and performs management, allocation, and scheduling together, forming a resource pool to provide services for a cloud service consumer (Cloud Service Consumer, CSC for short). Specifically, according to an application deployment request of the CSC, an application deployment server of the CSP allocates the cloud computing resources and executes a deployment plan corresponding to the application deployment request, where the application deployment request includes an application deployment package, and the deployment package includes all data required for deploying an application.

For example, in the prior art, the TOSCA (Topology and Orchestration Specification for Cloud Applications) standard normalizes a manner of describing a topology of an application and an operation and maintenance procedure. According to the TOSCA standard, an application deployment package is used to describe all information required for deploying an application, where the application deployment package includes at least one description file, the description file describes a full topology of the application, deployment artifact information of a node in the topology, and a method and method artifact information of the node in the topology. The application deployment package further includes a deployment artifact of the node, method artifacts of methods, and a deployment plan (Plan). The deployment plan is an executable workflow, and an application deployment server allocates a cloud computing resource and executes the deployment plan.

A full topology of an application may include an application content topology and a resource topology, and a node in a topology includes an application node and a resource node. For example, in an application deployment mode of a virtual application (Virtual Application, VA for short), a server may provide a user with a resource package that is specific to an application of a type. The resource package provides a resource topology, a resource node, a deployment artifact of the resource node, method artifacts of all methods, and a deployment plan; the user only needs to, by using an application deployment device (Application Deployer, AD for short), find a resource package suitable for the application, arrange an application content topology, and add a deployment artifact of an application node.

However, method artifacts corresponding to methods in a current deployment plan are all included in a resource package provided by a server, a user can execute the method artifacts in the resource package only according to the deployment plan, so as to deploy an application. Therefore, although an existing application deployment mode, for example, a VA, is simple, an encapsulation degree thereof is too high; a user cannot perform expansion or secondary development on the basis of an existing resource package, thereby causing inflexible application deployment. Therefore, a demand of a user cannot be met. For example, when the user expects to know and monitor a process of deploying a resource, for example, to observe whether an obtained cloud computing service is in conformity with a service level agreement (service level agreement, SLA for short), a current deployment mode cannot provide support, and therefore, a demand of a user cannot be met.

### SUMMARY

The present invention provides an application deployment method and device, so as to improve expansibility of application deployment.

A first aspect provides an application deployment method, including:
receiving an application deployment request, where the application deployment request includes a resource package identifier of a resource package, at least one method artifact, a correspondence between each method artifact and each abstract method that is described in a resource description file in the resource package, and method artifact information of each method artifact;
acquiring the resource package according to the resource package identifier, where the resource package includes the resource description file and a deployment plan, the resource description file describes the abstract method, and the deployment plan references the abstract method;
adding the method artifact information to the resource description file according to the correspondence between each method artifact and each abstract method that is described in the resource description file in the resource package, to form an application deployment description file; and
executing, according to the application deployment description file, the method artifact of the abstract method referenced by the deployment plan.

With reference to the first aspect, in a first possible implementation manner, the resource description file further describes an application node and a resource node; and a description of the abstract method is included in a node type of the application node and/or the resource node.

With reference to the first possible implementation manner of the first aspect, in a second possible implementation manner, the abstract method is included in the node type of the application node, the application deployment request includes node type implementation NTI of the application node, and the correspondence between the method artifact and the abstract method that is described in the resource description file in the resource package is described in the node type implementation NTI of the application node; and the adding the method artifact information to the resource description file is specifically: adding the NTI of the application node to the resource description file; or the abstract method is included in the node type of the resource node, the application deployment request includes a boundary definition, and the correspondence between the method artifact and the abstract method that is described in the resource description file in the resource package is described in the boundary definition; and the adding the method artifact information to the resource description file is specifically: adding the method artifact information described in the boundary definition to NTI of the resource node in the resource description file.

With reference to the second possible implementation manner of the first aspect, in a third possible implementation manner, the method further includes: modifying an attribute of the abstract method in the node type in the resource description file into an ordinary method; and/or adding the method artifact included in the application deployment request to the resource package.

With reference to the second possible implementation manner or the third possible implementation manner of the first aspect, in a fourth possible implementation manner, the application deployment request further includes a deployment artifact of the application node; and after the acquiring the resource package according to the resource package identifier, the method further includes: using the deployment artifact of the application node in the application deployment request as a deployment artifact of the application node in the resource description file.

With reference to the fourth possible implementation manner of the first aspect, in a fifth possible implementation manner, the application deployment request further includes deployment artifact information of the deployment artifact, and the using the deployment artifact of the application node in the application deployment request as a deployment artifact of the application node in the resource description file is specifically: adding the deployment artifact information to the resource description file; and adding the deployment artifact of the application node in the application deployment request to the resource package.

With reference to the first aspect or any one of the first to fifth possible implementation manners of the first aspect, in a sixth possible implementation manner, before the adding the method artifact information to the resource description file, to form an application deployment description file, the method further includes: determining that a method, marked by using an abstract identification keyword, in the resource description file is the abstract method.

A second aspect provides an application deployment method, including:
acquiring a resource package identifier of a resource package of a to-be-deployed application, and acquiring a resource description file of the resource package according to the resource package identifier, where the resource description file describes at least one abstract method;
generating, according to the at least one abstract method described in the resource description file, a method artifact corresponding to each abstract method, method artifact information of the method artifact, and a correspondence between each method artifact and each abstract method that is described in the resource description file;
generating an application deployment request, where the application deployment request includes the resource package identifier, the correspondence between each method artifact and each abstract method that is in the resource description file, the method artifact information of each method artifact, and the method artifact; and
sending the application deployment request to an application deployment server.

With reference to the second aspect, in a first possible implementation manner, the acquiring a resource description file of the resource package according to the resource package identifier includes: sending a resource package acquiring request to the application deployment server, where the resource package acquiring request carries the resource package identifier; and receiving the resource package that is sent by the application deployment server and that is corresponding to the resource package identifier, and acquiring the resource description file from the resource package; or sending a resource description file acquiring request to the application deployment server, where the resource description file acquiring request carries the resource package identifier of the resource package to which the resource description file belongs; and receiving the resource description file included in the resource package that is sent by the application deployment server and that is corresponding to the resource package identifier.

With reference to the second aspect or the first possible implementation manner of the second aspect, in a second possible implementation manner, the resource description file describes an application node, and the abstract method is included in a node type of the application node; the generating, according to the at least one abstract method described in the resource description file, a method artifact corresponding to each abstract method includes: generating, according to the abstract method, included in the node type of the application node, in the resource description file, the method artifact corresponding to the abstract method of the application node; and the method further includes: describing, in the application deployment request, the application node according to the application node described in the resource description file, where the method artifact information and the correspondence between the method artifact and the abstract method that is in the resource description file are described in node type implementation NTI of the application node that is described in the application deployment request.

With reference to the second aspect or either of the first and second possible implementation manners of the second aspect, in a third possible implementation manner, the resource description file further describes a resource node, and the abstract method is included in a node type of the resource node; and the generating, according to the at least one abstract method described in the resource description file, a method artifact corresponding to each abstract method includes: generating, according to the abstract method, included in the node type of the resource node, in the resource description file, the method artifact corresponding to the abstract method of the resource node, where the method artifact information and the correspondence between the method artifact and the abstract method that is in the resource description file are described in a boundary definition in the application deployment request.

With reference to the second possible implementation manner of the second aspect, in a fourth possible implementation manner, before the sending the application deployment request to an application deployment server, the method further includes: generating a deployment artifact of the application node and deployment artifact information of the deployment artifact, where the application deployment request further includes the deployment artifact of the application node and the deployment artifact information of the deployment artifact.

With reference to the fourth possible implementation manner of the second aspect, in a fifth possible implementation manner, before the generating a deployment artifact of the application node and deployment artifact information of the deployment artifact, the method further includes: determining that the application node in the resource description file is marked by using an abstract identification keyword, and that the resource description file does not include the deployment artifact information of the application node.

A third aspect provides an application deployment server, including:
a request receiving unit, configured to receive an application deployment request, where the application deployment request includes a resource package identifier of a resource package, at least one method artifact, a correspondence between each method artifact and each abstract method that is in a resource description file in the resource package, and method artifact information of each method artifact;
an information acquiring unit, configured to acquire the resource package according to the resource package identifier that is included in the application deployment request received by the request receiving unit, where the resource package includes the resource description file and a deployment plan, the resource description file describes the abstract method, and the deployment plan references the abstract method;
an information processing unit, configured to: according to the correspondence that is included in the application deployment request received by the request receiving unit and that is between each method artifact and each abstract method that is in the resource description file in the resource package, add the method artifact information to the resource description file that is included in the resource package acquired by the information acquiring unit, to form an application deployment description file; and
an application deployment unit, configured to execute, according to the application deployment description file formed by the information processing unit, the method artifact of the abstract method referenced by the deployment plan.

With reference to the third aspect, in a first possible implementation manner, the resource description file further describes an application node and a resource node; and a description of the abstract method is included in a node type of the application node and/or the resource node.

With reference to the first possible implementation manner of the third aspect, in a second possible implementation manner, the abstract method is included in the node type of the application node, the application deployment request includes node type implementation NTI of the application node, and the correspondence between the method artifact and the abstract method that is in the resource description file in the resource package is described in the node type implementation NTI of the application node; and that the information processing unit adds the method artifact information to the resource description file that is included in the resource package acquired by the information acquiring unit is specifically: adding the NTI of the application node to the resource description file; or the abstract method is included in the node type of the resource node, the application deployment request includes a boundary definition, and the correspondence between the method artifact and the abstract method that is in the resource description file in the resource package is described in the boundary definition; and that the information processing unit adds the method artifact information to the resource description file that is included in the resource package acquired by the information acquiring unit is specifically: adding the method artifact information described in the boundary definition to NTI of the resource node in the resource description file.

With reference to the second possible implementation manner of the third aspect, in a third possible implementation manner, the information processing unit is further configured to modify an attribute of the abstract method into an ordinary method, where the abstract method is in the node type in the resource description file that is included in the resource package acquired by the information acquiring unit; and/or add the method artifact included in the application deployment request that is received by the request receiving unit to the resource package.

With reference to the second possible implementation manner or the third possible implementation manner of the third aspect, in a fourth possible implementation manner, the application deployment request further includes a deployment artifact of the application node; and after the information acquiring unit acquires the resource package according to the resource package identifier, the information processing unit is further configured to use the deployment artifact of the application node in the application deployment request that is received by the request receiving unit as a deployment artifact of the application node in the resource description file that is included in the resource package acquired by the information acquiring unit.

With reference to the fourth possible implementation manner of the third aspect, in a fifth possible implementation manner, the application deployment request further includes deployment artifact information of the deployment artifact; and that the information processing unit uses the deployment artifact of the application node in the application deployment request that is received by the request receiving unit as a deployment artifact of the application node in the resource description file that is included in the resource package acquired by the information acquiring unit is specifically: adding the deployment artifact information to the resource description file; and adding the deployment artifact of the application node in the application deployment request to the resource package.

With reference to the third aspect or any one of the first to fifth possible implementation manners of the third aspect, in a sixth possible implementation manner, before adding the method artifact information included in the application deployment request received by the request receiving unit to the resource description file that is included in the resource package acquired by the information acquiring unit, to form the application deployment description file, the information processing unit is further configured to determine that a method, marked by using an abstract identification keyword, in the resource description file is the abstract method.

A fourth aspect provides an application deployment device, including:
an information acquiring unit, configured to acquire a resource package identifier of a resource package of a to-be-deployed application, and acquire a resource description file of the resource package according to the resource package identifier, where the resource description file describes at least one abstract method;
an information generating unit, configured to generate, according to the at least one abstract method described in the resource description file that is acquired by the information acquiring unit, a method artifact corresponding to each abstract method;
a request generating unit, configured to generate an application deployment request, where the application deployment request includes the resource package identifier acquired by the information acquiring unit, the correspondence between each method artifact generated by the information generating unit and one abstract method in the resource description file that is acquired by the information acquiring unit, the method artifact information of each method artifact, and the method artifact; and
a deployment requesting unit, configured to send the application deployment request generated by the request generating unit to an application deployment server.

With reference to the fourth aspect, in a first possible implementation manner, that the information acquiring unit acquires a resource description file of the resource package according to the resource package identifier is specifically: sending a resource package acquiring request to the application deployment server, where the resource package acquiring request carries the resource package identifier; and receiving the resource package that is sent by the application deployment server and that is corresponding to the resource package identifier, and acquiring the resource description file from the resource package; or sending a resource description file acquiring request to the application deployment server, where the resource description file acquiring request carries the resource package identifier; and receiving the resource description file included in the resource package that is sent by the application deployment server and that is corresponding to the resource package identifier.

With reference to the fourth aspect or the first possible implementation manner of the fourth aspect, in a second possible implementation manner, the resource description file describes an application node, and the abstract method is included in a node type of the application node; that the information generating unit generates, according to the at least one abstract method described in the resource description file that is acquired by the information acquiring unit, a method artifact corresponding to each abstract method is specifically: generating, according to the abstract method, included in the node type of the application node, in the resource description file, the method artifact corresponding to the abstract method of the application node; the request generating unit is further configured to describe, in the application deployment request, the application node according to the application node described in the resource description file that is acquired by the information acquiring unit; and the method artifact information and the correspondence between the method artifact and the abstract method that is in the resource description file are described in node type implementation NTI of the application node that is described in the application deployment request.

With reference to the fourth aspect or either of the first and second possible implementation manners of the fourth aspect, in a third possible implementation manner, the resource description file further describes a resource node, and the abstract method is included in a node type of the resource node; that the information generating unit generates, according to the at least one abstract method described in the resource description file that is acquired by the information acquiring unit, a method artifact corresponding to each abstract method is specifically: generating, according to the abstract method, included in the node type of the resource node, in the resource description file, the method artifact corresponding to the abstract method of the resource node; and the method artifact information and the correspondence between the method artifact and the abstract method that is in the resource description file are described in a boundary definition in the application deployment request.

With reference to the third possible implementation manner of the fourth aspect, in a fourth possible implementation manner, before the deployment requesting unit sends the application deployment request generated by the request generating unit to the application deployment server, the information generating unit generates a deployment artifact of the application node and deployment artifact information of the deployment artifact, where the application deployment request further includes the deployment artifact of the application node and the deployment artifact information of the deployment artifact.

With reference to the fourth aspect, in a fifth possible implementation manner, before generating the deployment artifact of the application node and the deployment artifact information of the deployment artifact, the information generating unit is further configured to determine that an application node in the resource description file acquired by the information acquiring unit is marked by using an abstract identification keyword, and that the resource description file does not include deployment artifact information of the application node.

A fifth aspect provides an application deployment server, including a communications interface, a processor, and a memory, where:
the communications interface is configured to communicate with an external device and receive an application deployment request, where the application deployment request includes a resource package identifier of a resource package, at least one method artifact, a correspondence between each method artifact and each abstract method that is described in a resource description file in the resource package, and method artifact information of each method artifact;
the memory stores an application program; and
the processor invokes the application program stored in the memory; acquires the resource package according to the resource package identifier, where the resource package includes the resource description file and a deployment plan, the resource description file describes the abstract method, and the deployment plan references the abstract method; adds the method artifact information to the resource description file according to the correspondence between each method artifact and each abstract method that is described in the resource description file in the resource package, to form an application deployment description file; and executes, according to the application deployment description file, the method artifact of the abstract method referenced by the deployment plan.

A sixth aspect provides an application deployment device, including a communications interface, a processor, and a memory, where:
the communications interface is configured to communicate with an external device, acquire a resource package identifier of a resource package of a to-be-deployed application, and acquire a resource description file of the resource package according to the resource package identifier, where the resource description file describes at least one abstract method;
the memory stores an application program; and
the processor invokes the application program stored in the memory, generates, according to the at least one abstract method described in the resource description file, a method artifact corresponding to each abstract method; and generates an application deployment request, where the application deployment request includes the resource package identifier, the correspondence between each method artifact and each abstract method that is described in the resource description file, the method artifact information of each method artifact, and the method artifact; and
the communications interface is further configured to send the application deployment request to an application deployment server.

Technical effects of the application deployment method and device provided in the present invention are as follows: An abstract method is set in a resource package, and a demand of a user deploying an application can be met provided that the user provides a method artifact corresponding to the abstract method, which, compared with the prior art, improves expansibility of application deployment.

### BRIEF DESCRIPTION OF DRAWINGS

FIG. 1A is a schematic structural diagram of a service template described in an application deployment description file on which an application deployment method according to an embodiment of the present invention is based;
FIG. 1B is a schematic structural diagram of a deployment plan, corresponding to FIG. 1A, according to an embodiment of the present invention;
FIG. 2 is a schematic diagram of an application topology described in an application deployment description file in an application deployment method according to an embodiment of the present invention;
FIG. 3 is a schematic flowchart of an application deployment method according to an embodiment of the present invention;
FIG. 4 is a schematic flowchart of an application deployment method according to an embodiment of the present invention;
FIG. 5 is a schematic flowchart of an application deployment method according to an embodiment of the present invention;
FIG. 6A is a schematic diagram of a topology of a resource description file in an application deployment method according to an embodiment of the present invention;
FIG. 6B is a schematic diagram of a deployment plan in an application deployment method according to an embodiment of the present invention;
FIG. 6C is a schematic diagram showing that an application content package and a resource package are corresponding to each other in an application deployment method according to an embodiment of the present invention;
FIG. 7 is a schematic structural diagram of an application deployment server according to an embodiment of the present invention;
FIG. 8 is a schematic structural diagram of an application deployment device according to an embodiment of the present invention;
FIG. 9 is a schematic diagram of a physical structure of an application deployment server according to an embodiment of the present invention; and
FIG. 10 is a schematic diagram of a physical structure of an application deployment device according to an embodiment of the present invention.

### DESCRIPTION OF EMBODIMENTS

An application deployment method provided in embodiments of the present invention may be applied to the TOSCA standard or another aspect, but is not limited to the TOSCA standard.

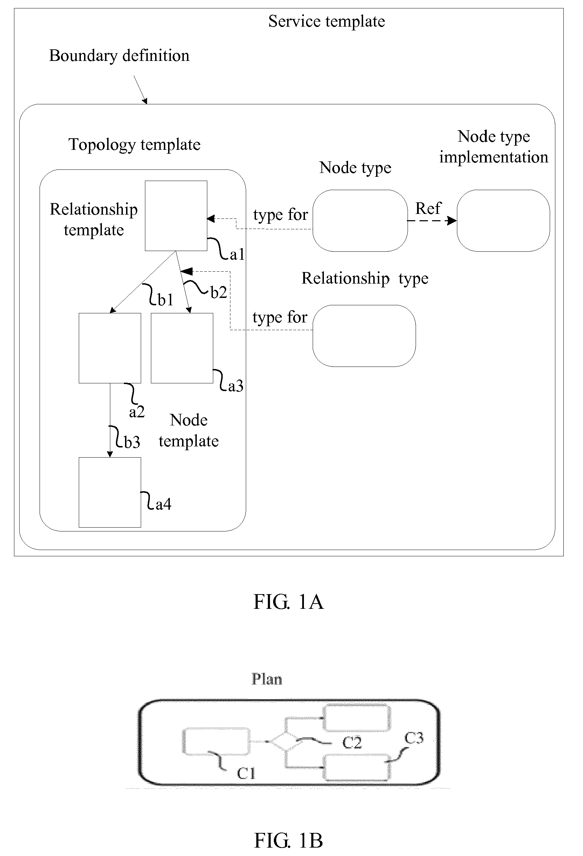

In the embodiments of the present invention, information required for deploying an application is described in an application deployment package, named Cloud Service Archive (Cloud Service Archive, CSAR for short), in an application deployment server. The application deployment package at least includes one application deployment description file with a suffix ste, where the application deployment description file *.ste may describe deployment information of the application in an XML language, and a root element of the application deployment description file *.ste is a service template Service Template. That is, in the embodiments of the present invention, the ServiceTemplate may be used to fully describe information about an application that needs to be deployed. A sub-element of the application deployment description file *.ste includes a topology template TopologyTemplate, a node type NodeType, a node template NodeTemplate, a relationship type RelationshipType, a relationship template RelationshipTemplate, a boundary definition BoundaryDefinitions, and the like. A relationship between the root element and the sub-element of the application deployment description file is shown in FIG. 1A. FIG. 1A is a schematic structural diagram of a service template described in an application deployment description file on which an application deployment method according to an embodiment of the present invention is based.

As shown in FIG. 1A, this embodiment of the present invention uses a TopologyTemplate to describe an application topology. The application topology includes node templates for four nodes, namely, a1, a2, a3, and a4 separately, that is, each node template describes one node. A type of each NodeTemplate is defined by a NodeType (a type attribute of a NodeTemplate describes a NodeType corresponding to the NodeTemplate). The NodeType defines an attribute (which is defined by using Properties) of a node, an interface (which is defined by using an interface set (Interfaces)) of the node, and the like; the NodeTemplate is an instance of the NodeType. The interface set (Interfaces) in the NodeType may include at least one interface (Interface), where each Interface may include one or more methods (that is, Operation), and each method is corresponding to one method artifact. A method of a node refers to a function required for operating the node. For example, a typical Web application includes an application server node, and in a process of deploying the application, a configuration file of an application server needs to be configured (for example, setting an IP address and a port number of a database server); then the configuration process may be encapsulated into a method (that is, Operation), where a method name is config (that is, Operation name), and parameters are DBIP (the IP address of the database server) and DBPORT (the port number of the database server). A method artifact refers to specific implementation corresponding to the foregoing method, and may be an executable file, for example, a script file. For example, in the foregoing example, a method artifact of the method config may be config. java. In addition, each node is corresponding to one deployment artifact, and the deployment artifact refers to an installation package or a file of the node, and may be an image (image) or an installable software package; for example, a deployment artifact of a Web application node is a WAR package.

Each NodeType is corresponding to one node type implementation (NodeTypeImplementation, NTI for short), where the NTI describes information about a deployment artifact of a node corresponding to the NodeType and about method artifacts of all methods included in an Interface of the NodeType. For example, referring to FIG. 1A, each Interface of Interfaces in a NodeType that is corresponding to a node template of the node a1 describes at least one method, where each method is corresponding to one method artifact; but NTI corresponding to the NodeType describes information about a deployment artifact of the node a1 and about method artifacts of all methods included in the Interface in the NodeType.

Each side for connecting a node in the TopologyTemplate of the application topology is a RelationshipTemplate. The RelationshipTemplate is the prior art, and is not described in detail herein in this embodiment of the present invention.

Each application deployment package further includes a deployment plan (Plan), as shown in FIG. 1B, where FIG. 1B is a schematic structural diagram of a deployment plan, corresponding to FIG. 1A, according to an embodiment of the present invention. The deployment plan is an executable workflow, and is actually a workflow formed by multiple referenced methods. A task to be executed in each step in the workflow is a method defined in a NodeType, and may be described in a standard language, for example, be described by using BPMN2.0. Executing the workflow is actually executing method artifacts corresponding to methods forming the workflow. During execution of the deployment plan, an application deployment server sequentially runs method artifacts one by one according to a definition of the deployment plan, where the method artifacts are corresponding to methods that are corresponding to tasks. For example, referring to FIG. 1B, the plan includes tasks c1, c2, and c3. According to the definition in the plan, when the plan is executed, an execution sequence is that: the task c1 is first executed, next the task c2 is executed, and then the task c3 is executed. The mentioned c1, c2, and c3 are methods corresponding to an Interface in the NodeType. When the method is executed, a method artifact corresponding to the method is actually executed. For example, when c1 is executed, a method artifact corresponding to c1 is actually executed. A correspondence between a method and a method artifact is defined in NTI in an application deployment description file. Therefore, the application deployment server may execute, according to the correspondence that is between the method and the method artifact and that is in the NTI in the application deployment description file, the method artifact corresponding to c1.

In addition, each ServiceTemplate includes a boundary definition (which is defined by using BoundaryDefinitions), and some components internally defined in the ServiceTemplate are all presented in the BoundaryDefinitions to a user, where the components are the foregoing NodeTemplate, deployment artifact, method artifact, and the like.

It can be known from the foregoing descriptions that, one application deployment package includes information required for deploying an application, an application deployment description file, a deployment plan, a deployment artifact of a node, and method artifacts of methods. The application deployment description file describes a full topology of the application, deployment artifact information of the node in the topology, a method and method artifact information of the node in the topology.

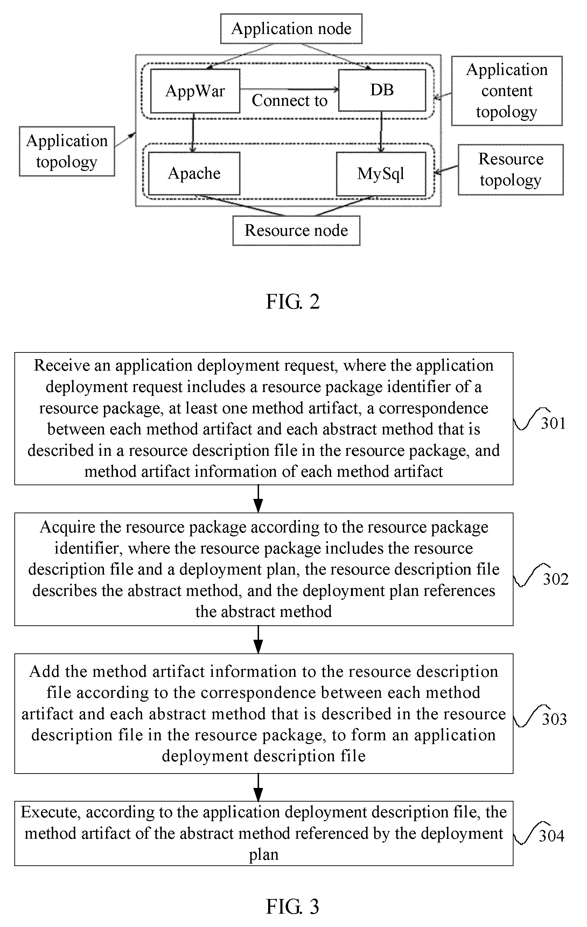

FIG. 2 is a schematic diagram of an application topology described in an application deployment description file in an application deployment method according to an embodiment of the present invention. Generally, to deploy a typical Web application, a full application topology of the application may include two parts: an application content topology and a resource topology. For example, as shown in FIG. 2, the application topology includes node templates of four nodes, namely, AppWar, DB, Apache, and MySql. AppWar and DB are application nodes (deployment artifacts thereof are a War package and a database file respectively), and the templates of the two nodes AppWar and DB form the application content topology; Apache and MySql are resource nodes (deployment artifacts thereof are separately image files including Apache software and MySql software respectively), and the resource topology comprises the two nodes Apache and MySql.

In this embodiment of the present invention, the application topology also includes an application node and a resource node. In order to improve expansibility of application deployment, to enable an application deployment device AD of a CSC to introduce third-party monitoring to monitor a cloud computing resource of the AD in real time, in this embodiment of the present invention, an application deployment mode in which a virtual framework (Virtual Framework, VF for short) is used is designed. In the VF mode, a resource package includes an abstract method, so that the AD performs expansion for the abstract method. That is, the AD needs to provide a method artifact of the abstract method. For example, the method artifact is a program file connectMonitor.py, and third party monitoring is implemented by executing the program file. Therefore, by using the program file as the method artifact, introduction of the third-party monitoring may be implemented, so as to meet a demand of the AD. Certainly, the AD may also expand another demand, similarly, provided that a method artifact corresponding to the demand is provided to serve as the method artifact of the foregoing abstract method.

FIG. 3 is a schematic flowchart of an application deployment method according to an embodiment of the present invention. The method in this embodiment is executed by an application deployment server. As shown in FIG. 3, the method may include:

301: Receive an application deployment request, where the application deployment request includes a resource package identifier of a resource package, at least one method artifact, a correspondence between each method artifact and each abstract method that is described in a resource description file in the resource package, and method artifact information of each method artifact.

Specifically, the method artifact information of each method artifact and the correspondence between each method artifact and each abstract method that is described in the resource description file in the resource package may be described in an application deployment description file. The method artifact and the application deployment description file are included in an application content package, and the application deployment request includes the application content package and the resource package identifier.

The application deployment server may be a server responsible for deploying an application, and the application deployment server receives an application deployment request sent by an application deployment device AD, where the application deployment request includes a resource package identifier of a resource package, at least one method artifact, a correspondence between each method artifact and each abstract method that is described in a resource description file in the resource package, and method artifact information of each method artifact. That is, in the application deployment request, one method artifact is corresponding to one abstract method described in the resource description file.

Specifically, the resource package is developed and provided by a resource package provider and has been registered with the application deployment server. A unique ID created for the resource package by the application deployment server when the resource package provider registers the resource package is referred to as the resource package identifier. The resource package is a resource package in a VF mode, and includes information required for using the resource package, for example, a resource description file and a deployment plan, where the resource description file describes an abstract method, and the deployment plan references the abstract method. Method artifact information is lacked in the resource description file for the abstract method, and a method artifact for the abstract method is not defined in the resource package. A general method has corresponding method artifact information in a resource description file, but the abstract method defined in this embodiment does not have method artifact information.

Before sending the application deployment request, the AD searches the application deployment server for a resource package of a to-be-deployed application and obtains a resource package identifier; and acquires, by using the resource package identifier, a resource description file of the resource package. Specifically, the AD sends a resource package acquiring request to the application deployment server, where the resource package acquiring request carries the resource package identifier; and receives the resource package that is sent by the application deployment server and that is corresponding to the resource package identifier, and acquires the resource description file from the resource package. As an optional manner, the AD further sends a resource description file acquiring request to the application deployment server, where the resource description file acquiring request carries the resource package identifier; and receives the resource description file included in the resource package that is sent by the application deployment server and that is corresponding to the resource package identifier.

In a specific implementation process, the resource package acquiring request may be a getResourcePackage request, and the resource package identifier is carried in the request; the resource description file acquiring request may be get description document, and the resource package identifier is carried in the request.

After acquiring the resource description file, the AD provides, according to a description about required data in the resource description file, data required for using the resource package, for example, provides a method artifact of the abstract method described in the resource description file, and/or provides a deployment artifact of an application node. Specifically, the AD generates a corresponding method artifact according to a description about the abstract method in the resource description file. It should be noted that, a process of generating the method artifact by the AD is a user programming process, and is not described in detail herein in this embodiment of the present invention. The AD adds, in form of an application content package, the generated method artifact and/or deployment artifact, and information (for example, an application content description file) for describing these data to a deployment request, and also adds the resource package identifier of the resource package to the deployment request; and then sends the deployment request to the application deployment server.

302: Acquire the resource package according to the resource package identifier, where the resource package includes the resource description file and a deployment plan, the resource description file describes the abstract method, and the deployment plan references the abstract method.

In this step, the application deployment server acquires the resource package according to the resource package identifier carried in the application deployment request, where the resource package includes the resource description file and the deployment plan, the resource description file describes the abstract method, and the deployment plan refereces the abstract method.

Further, the resource description file further describes an application node and a resource node, and a description of the abstract method is included in a node type of the application node and/or the resource node.

303: Add the method artifact information to the resource description file according to the correspondence between each method artifact and each abstract method that is described in the resource description file in the resource package, to form an application deployment description file.

Optionally, the abstract method is included in the node type of the application node, the application deployment request includes node type implementation NTI of the application node, and the correspondence between the method artifact and the abstract method that is described in the resource description file in the resource package is described in the node type implementation NTI of the application node; and the adding the method artifact information to the resource description file is specifically: adding the NTI of the application node to the resource description file.

Optionally, the abstract method is included in the node type of the resource node, the application deployment request includes a boundary definition, and the correspondence between the method artifact and the abstract method that is described in the resource description file in the resource package is described in the boundary definition; and the adding the method artifact information to the resource description file is specifically: adding the method artifact information described in the boundary definition to NTI of the resource node in the resource description file.

Further, the application deployment server may further add the method artifact to the resource package. It should be noted that, the node type implementation NTI of the application node and the boundary definition may be included in an application content description file.

Further, after the method artifact information of the abstract method is added to the resource description file, an attribute of the abstract method described in the node type in the resource description file may further be modified into an ordinary method.

Further, before this step is executed, the application deployment server may determine, according to the following method, whether the abstract method is defined in the resource description file: if it is determined that a method in the resource description file is marked by using an abstract identification keyword, and that the resource description file does not include method artifact information of the method, the application deployment server determines that the method that is marked by using the abstract identification keyword and that is described in the resource description file is the abstract method.

Further, the application deployment request further includes a deployment artifact of the application node and deployment artifact information of the deployment artifact. After the acquiring the resource package according to the resource package identifier, the method further includes: adding the deployment artifact information of the application node to the node type implementation NTI, corresponding to the application node, in the resource description file of the resource package, and using the deployment artifact of the application node in the application deployment request as a deployment artifact of the application node in the resource description file.

304: Execute, according to the application deployment description file, the method artifact of the abstract method referenced by the deployment plan.

Specifically, the application deployment description file defines the abstract method, and the deployment plan references the abstract method (that is, including names of all abstract methods). The deployment plan is actually a workflow formed by multiple methods, and executing the workflow is actually executing method artifacts corresponding to the methods forming the workflow. Specifically, executing the abstract method is executing the method artifact corresponding to the abstract method, where the method artifact is developed and provided by the AD; therefore, through execution of the deployment plan, a demand, for example, third-party monitoring, expanded by the AD by using the method artifact, of the AD may be introduced.

Before this step is executed, the application deployment server may further generate an application deployment package according to deployment artifacts and method artifacts that are separately included in the application deployment description file, the resource package, and the application deployment request, and the deployment plan in the resource package, where the application deployment package includes the deployment plan and the deployment artifacts and the method artifacts that are of the application deployment description file, where the method artifacts include the method artifact of the abstract method.

According to the application deployment method in this embodiment, an abstract method is set in a resource package, and a demand of a user deploying an application can be met provided that the user provides a method artifact corresponding to the abstract method, which, compared with the prior art, improves expansibility of application deployment.

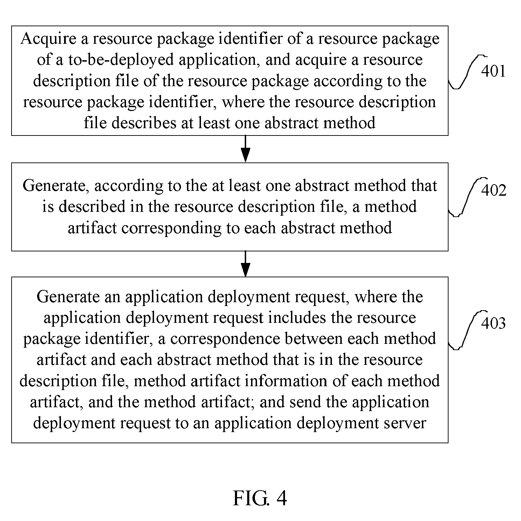

FIG. 4 is a schematic flowchart of an application deployment method according to an embodiment of the present invention. The method is executed by an application deployment device, for example, an AD. As shown in FIG. 4, the method may include:

401: Acquire a resource package identifier of a resource package of a to-be-deployed application, and acquire a resource description file of the resource package according to the resource package identifier, where the resource description file describes at least one abstract method.

The resource package includes the resource description file and a deployment plan, and the resource description file describes the at least one abstract method.

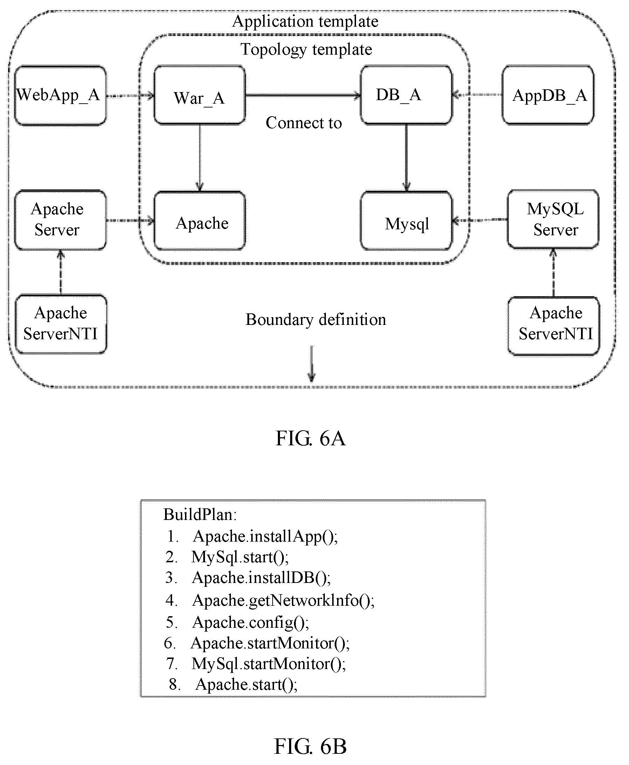

As shown in FIG. 6B, the deployment plan in the resource package references the at least one abstract method, for example, methods corresponding to 6 and 7 in FIG. 6B.

Specifically, before deploying an application, the application deployment device AD may acquire the resource package identifier by means of interface searching, and send a resource package acquiring request to the application deployment server, where the resource package acquiring request carries the resource package identifier; and receive the resource package that is sent by the application deployment server and that is corresponding to the resource package identifier, and acquire the resource description file from the resource package. As an optional manner, the application deployment device AD may send a resource description file acquiring request to the application deployment server, where the resource description file acquiring request carries the resource package identifier of the resource package to which the resource description file belongs; and receive the resource description file included in the resource package that is sent by the application deployment server and that is corresponding to the resource package identifier.

402: Generate, according to the at least one abstract method described in the resource description file, a method artifact corresponding to each abstract method, method artifact information of the method artifact, and a correspondence between each method artifact and each abstract method that is described in the resource description file.

Specifically, after acquiring the resource description file, the AD develops and provides, according to a description of the abstract method in the resource description file, the method artifact corresponding to the abstract method, where one abstract method is corresponding to one method artifact.

The AD further describes the method artifact information of each method artifact and the correspondence between each method artifact and each abstract method that is described in the resource description file. Specifically, the resource description file describes an application node, and the abstract method is included in a node type of the application node; the generating, according to the at least one abstract method described in the resource description file, a method artifact corresponding to each abstract method includes: generating, according to the abstract method, included in the node type of the application node, in the resource description file, the method artifact corresponding to the abstract method of the application node.

The method further includes: describing, in an application deployment request, the application node according to the application node described in the resource description file, where:
the method artifact information and the correspondence between the method artifact and the abstract method that is described in the resource description file are described in node type implementation NTI of the application node that is described in the application deployment request.

Optionally, the resource description file further describes a resource node, and the abstract method is included in a node type of the resource node; and the generating, according to the at least one abstract method described in the resource description file, a method artifact corresponding to each abstract method includes: generating, according to the abstract method, included in a description of the node type of the resource node, in the resource description file, the method artifact corresponding to the abstract method of the resource node, where the method artifact information and the correspondence between the method artifact and the abstract method that is described in the resource description file are described in a boundary definition in the application deployment request.

As an implementation manner, both the node type implementation NTI of the application node and the boundary definition are included in an application content description file, and the application deployment request includes the application content description file.

In addition, if the AD further determines that the application node in the resource description file is marked by using an abstract identification keyword, and that the resource description file does not include deployment artifact information of the application node, the AD generates, according to the resource description file, a deployment artifact of the application node and deployment artifact information of the deployment artifact; the application deployment request further includes the deployment artifact of the application node and the deployment artifact information of the deployment artifact.

It should be noted that, the deployment artifact information of the application node is also included in the node type implementation NTI of the application node.

403: Generate an application deployment request, where the application deployment request includes the resource package identifier, the correspondence between each method artifact and each abstract method that is described in the resource description file, the method artifact information of each method artifact, and the method artifact; and send the application deployment request to an application deployment server.

The application deployment request includes the resource package identifier, the correspondence between each method artifact and each abstract method that is in the resource description file, the method artifact information of each method artifact, and the method artifact, so that the application deployment server acquires the resource package according to the resource package identifier, and generates, according to the resource package and the application deployment request, an application deployment package that is used for deploying the application, where the application deployment package includes an application deployment description file, the deployment plan, and the method artifact corresponding to the abstract method, so that when executing the deployment plan according to the application deployment description file, the application deployment server executes the method artifact corresponding to the abstract method. The method artifact is provided for the abstract method by the AD, which implements that the AD introduces a demand of the AD in a manner of providing a method artifact corresponding to an abstract method.

Further, before the AD generates the deployment artifact of the application node and the deployment artifact information of the deployment artifact, the method further includes: determining that the application node in the resource description file is marked by using the abstract identification keyword, and that the resource description file does not include the deployment artifact information of the application node.

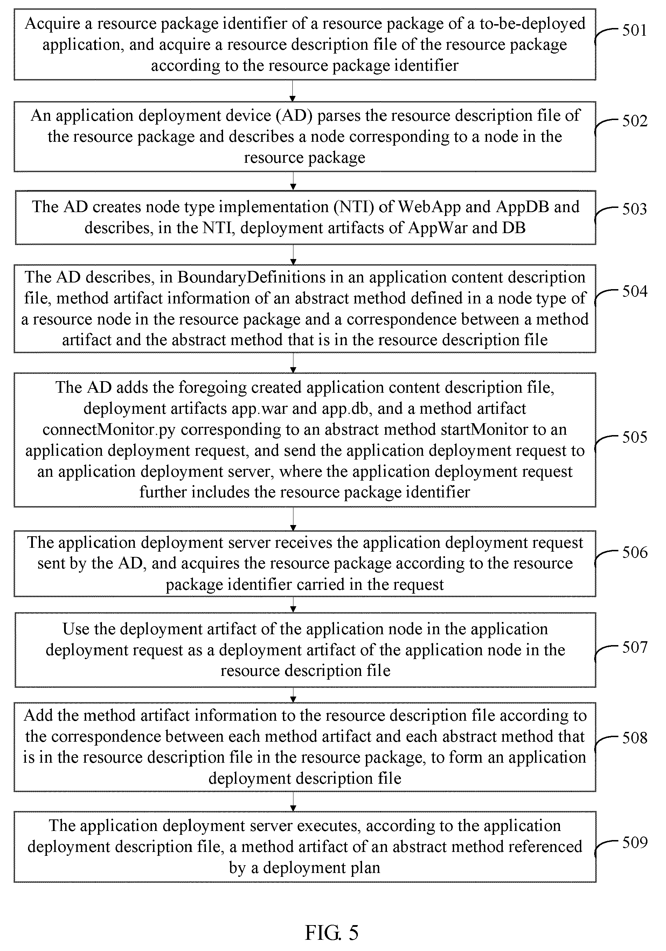

FIG. 5 is a schematic flowchart of an application deployment method according to an embodiment of the present invention. This embodiment describes a full and detailed procedure of the application deployment method, that is, an entire process of acquiring a resource description file, generating, by an AD according to the resource description file, content carried in an application deployment request, and generating, by an application deployment server, an application deployment package according to a resource package and an application content package and executing a deployment plan. As shown in FIG. 5, the method includes:

501: Acquire a resource package identifier of a resource package of a to-be-deployed application, and acquire a resource description file of the resource package according to the resource package identifier.

It is assumed that an AD searches the application deployment server for a resource package, to deploy a Web application. For example, during deployment of the Web application, a database DB and an application package War need to be used. It is further assumed that an identifier of the resource package that meets a requirement and that is found by the AD is MoniRes; for a full topology of the resource package, reference may be made to FIG. 6A, and for a deployment plan included in the resource package, reference may be made to FIG. 6B. FIG. 6A is a schematic diagram of a topology of a resource description file in an application deployment method according to an embodiment of the present invention, and FIG. 6B is a schematic diagram of a deployment plan in an application deployment method according to an embodiment of the present invention. As shown in FIG. 6A, the resource description file includes node templates of nodes War_A, DB_A, Apache, and MySql. Apache and MySql are resource nodes, where a NodeType of Apache is ApacheServer, and NodeTypeImplementation (NTI) of Apache is ApacheServerNTI; a NodeType of MySql is MySQLServer, and NodeTypeImplementation (NTI) of MySql is MySQLServerNTI. One abstract method (the abstract method may be defined in an Interface in a NodeType) is separately defined in the two NodeTypes, namely ApacheServer and MySQLServer, and a name is startMonitor (an example name, in this embodiment, of the abstract method, and may also certainly be another method name during specific implementation). That is, either of the two resource nodes includes an abstract method named startMonitor.

In this embodiment, a definition of an abstract method may be included in a NodeType of a node, and a specific defining manner of the abstract method may be that: an optional (Optional) attribute is added to a method Operation, for example, abstract (abstract); if a value of the attribute is yes, it indicates that the method is an abstract method; or if a value of the attribute is no, it indicates that the method is an ordinary method, and a default value is no. The specific defining manner is as follows:

```
           <Interfaces>
                 <Interface name="string">
                    <Operation name="string" abstract="yes|no"/>
                 </Interface>
           </Interfaces>
```

As shown above, the method Operation is defined in an Interface in the Interfaces, and a method name is described by using a name (name) attribute, that is, the method name is a value of a string field that is taken according to the foregoing Operation name; and an attribute abstract indicates whether the method for obtaining the value of the field named string is an abstract method. Referring to the foregoing defining example, the specific definition manner means that: Interfaces include one Interface, and a name (Interface name) of the Interface is a value of the string field; the Interface further includes a method, and a name of the method is also a value of the string field (Operation name=string); and a value of the abstract attribute of the method is yes, which means that the method string is an abstract method. For example, the abstract method startMonitor of the foregoing node Apache and node MySql may be defined as follows:

```
           <Interfaces>
                 <Interface name="monitor">
                    <Operation name="startMonitor" "abstract="yes""/>
                 </Interface>
           </Interfaces>
```

As shown above, because a value of an attribute abstract of the method startMonitor is yes, the method startMonitor is an abstract method.

In addition, in order to specify a method artifact for an abstract method, in this embodiment, abstract methods of the two resource nodes are included in a boundary definition (BoundaryDefinitions) of the resource description file, so as to be presented to a user. The Operation included in the BoundaryDefinitions is defined in a separate Interface, and can be mapped to the Interface in the node type. For example, a manner of describing, in the BoundaryDefinitions, the abstract methods startMonitor of the node Apache and the node MySql is as follows:

```
           <BoundaryDefinitions>
             <Interfaces>
              <Interface name="monitor_boundary">
                 <Operation name="startMonitor_MySql">
                        <NodeOperation nodeRef="MySql" interfaceName="monitor"
 operationName="startMonitor"/>
                 </Operation >
                  <Operation name="startMonitor_Apache">
                        <NodeOperation nodeRef="Apache" interfaceName="monitor"
 operationName="startMonitor"/>
                 </Operation>
              </Interface >
             </Interfaces>
           .... //Another definition
           </BoundaryDefinitions>
```

As shown above, the Interfaces and the Interface are defined in the BoundaryDefinitions, where a name (name) of the Interface is " monitor_boundary". The Interface named monitor_boundary describes two Operations, which are startMonitor MySql and startMonitor_Apache separately, indicating that the two methods are abstract methods that are specific to the nodes MySql and Apache respectively. StartMonitor MySql defines one NodeOperation, which indicates that startMonitor_MySql is mapped to the NodeOperation. The NodeOperation includes three attributes, which are used to point to a method, where nodeRef describes a node name, interfaceName describes an interface name, and operationName describes a method name. For example, in this example, startMonitor MySql is corresponding to a method startMonitor in an interface "monitor" in the node MySql, and startMonitor_Apache is corresponding to a method startMonitor in an interface "monitor" in the node Apache. For example, with reference to the foregoing definition of the abstract method startMonitor of the node MySql and as shown in FIG. 6A, the NodeType corresponding to the node MySql is MySQLServer, and MySQLServer includes an Interface named "monitor". An abstract method (an attribute of abstract is yes) named "startMonitor" is defined in the Interface "monitor"; then, the foregoing abstract method named "startMonitor" and presented in the BoundaryDefinitions is mapped (or corresponding), by using the NodeOperation, to an abstract method in MySQLServer. A mapping method is shown above. A node name (nodeRef) is "MySql" (it can be learnt, provided that the node name is specified, that the abstract method is defined in the Interface in the NodeType corresponding to the node), an interface name (interfaceName) is "monitor", and a method name (operationName) is "startMonitor"; in this case, a mapping relationship between an abstract method in the BoundaryDefinitions and an abstract method of an actual node is established. A mapping principle of the abstract method in the node Apache is similar, which is not described again.

As shown in FIG. 6A, the abstract methods startMonitor of both the node Apache and the node MySql have been included in the deployment plan BuildPlan in FIG. 6B. For example, the deployment plan BuildPlan in FIG. 6B references "Apache.installApp-MySql.start-MySql.installDB-MySql.getNetworkinfo-Apache. config-A pache.startMonitor-MySql.startMonitor-Apache.start", and BuildPlan includes Apache_startMonitor and MySql_startMonitor; therefore, the AD may invoke the two abstract methods in BuildPlan provided that the AD provides method artifacts that are separately specific to the two abstract methods.

As shown in FIG. 6A, NodeTypes of the node War_A and the node DB_A are WebApp_A and AppDB A respectively, and no method is defined in WebApp_A or AppDB_A; that is, node types of the two nodes War_A and DB_A do not include any method. Therefore, the node types of War_A and DB_A are abstract NodeTypes (abstract NodeType), and the two nodes are abstract application nodes. The NodeTypes of the abstract application nodes do not include a deployment artifact, and Operations defined in the NodeTypes are abstract methods; therefore, the AD needs to provide deployment artifacts of the abstract application nodes and method artifacts of the Operations. Because no method is defined in WebApp_A or AppDB_A in the example shown in FIG. 6A, the AD only needs to provide deployment artifacts of the two abstract application nodes. In addition, as described above, the abstract methods are marked in the resource description file by using an abstract identifier "abstract", and NTI of the nodes does not include content of a corresponding method artifact. The abstract application nodes are also marked in the resource description file by using an abstract identifier "abstract", and deployment artifact information of the nodes is not included in the resource description file either. That is, the abstract application nodes are application nodes that do not have a corresponding deployment artifact, and if the abstract application nodes include a method, all methods included by the abstract application nodes are abstract methods. As an optional solution, an abstract method included in an abstract application node may not be marked by using an abstract identifier "abstract".

Referring to FIG. 6A, the resource package includes information required for using the resource package, where the information includes the resource description file describing topology information shown in FIG. 6A, the deployment plan shown in FIG. 6B, and the like. The resource description file describes an application topology, an abstract application node, and a resource node. It should be noted that, this embodiment is described by using an example in which a resource node includes an abstract method (that is, the abstract method is defined in an Interface in a NodeType of the resource node). During specific implementation, the abstract method may be included in the abstract application node and/or the resource node ("and/or" indicates that the abstract method is included in at least one of the abstract application node and the resource node), and the abstract method is used in the deployment plan.

It can be known from the foregoing descriptions that, to use the resource package, the AD further needs to provide the following data: a deployment artifact of an application node and method artifacts (as described above, the abstract method does not have a method artifact, which needs to be provided) of all abstract methods (this embodiment uses an example in which the resource node has an abstract method). To distinguish a method artifact of the abstract method in the abstract application node from a method artifact of the abstract method in the resource node, the method artifact of the abstract method in the abstract application node may be referred to as an application method artifact, and the method artifact of the abstract method in the resource node may be referred to as a resource method artifact.

502: An AD parses the resource description file of the resource package and describes a node corresponding to a node in the resource package.

The AD parses the resource description file of the resource package MoniRes, acquires the NodeTypes WebApp_A and AppDB_A in the resource description file and an abstract identification keyword carried in the application nodes War_A and DB_A, and separately creates node types WebApp and AppDB of the application nodes. The node type WebApp includes entire content of WebApp_A, and AppDB also includes entire content of AppDB_A. Then the AD separately creates NodeTemplates of the NodeTypes WebApp and AppDB, where a NodeTemplate of WebApp is AppWar, a NodeTemplate of AppDB is DB, and AppWar and DB are application nodes.

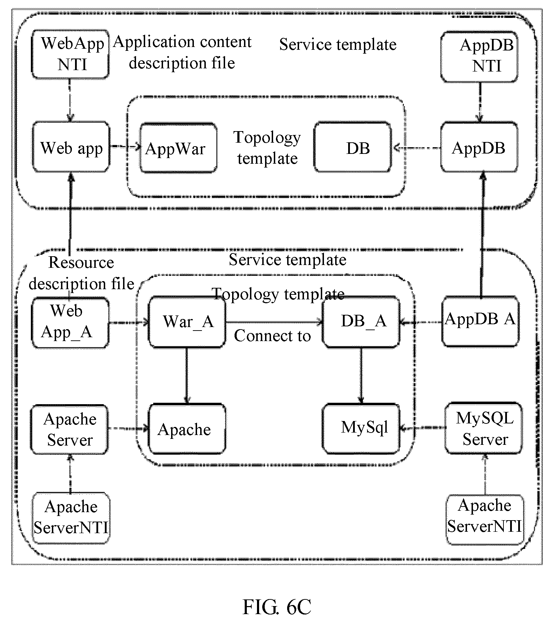

Optionally, referring to FIG. 6C, the AD may further create an application content description file, and add the foregoing created node templates, node types, and NTI to the application content description file.

Referring to FIG. 6C, FIG. 6C is a schematic diagram showing that an application content package and a resource package are corresponding to each other in an application deployment method according to an embodiment of the present invention. The node types WebApp and AppDB include the entire content of WebApp_A and AppDB_A, where the NodeTypes of the application nodes AppWar and DB are WebApp and AppDB respectively, and the NodeTypes of the abstract application nodes War_A and DB_A are WebApp_A and AppDB_A respectively. Therefore, the application nodes AppWar and DB are corresponding to the application nodes War_A and DB_A in the resource description file respectively.

503: The AD creates NTI of WebApp and AppDB and describes, in the NTI, deployment artifacts of AppWar and DB.

The AD creates, in the application content description file, the NTI (the NTI may describe deployment artifacts and method artifact information of the NodeTypes) of WebApp and AppDB, that is, WebAppNTI and AppDBNTI respectively (as shown in FIG. 6C). The AD further describes deployment artifacts app.war and app.db in WebAppNTI and AppDBNTI respectively. Because the NodeTypes of the application nodes AppWar and DB are WebApp and AppDB respectively, and WebAppNTI and AppDBNTI are NTI of WebApp and AppDB respectively, the foregoing deployment artifacts app.war and app.db are deployment artifacts that are corresponding to the application nodes AppWar and DB respectively.

In addition, the application nodes AppWar and DB are corresponding to the application nodes War_A and DB_A in the resource description file respectively. Therefore, information about the deployment artifacts app.war and app.db, described in WebAppNTI and AppDBNTI, of AppWar and DB is corresponding to deployment artifact information of the application nodes War_A and DB_A. However, because the application nodes War_A and DB_A in this embodiment do not include any method, WebAppNTI and AppDBNTI describe only the deployment artifact information. If abstract methods are defined in the NodeTypes of War_A and DB_A in the resource package, the method artifact information of the abstract methods further needs to be described in WebAppNTI and AppDBNTI, for example, describing a correspondence between an abstract method and a method artifact; that is, a correspondence between a method artifact and an abstract method that is of an abstract application node in the resource description file in the resource package is described in NTI of an application node, corresponding to the abstract application node, in the application content description file.

504: The AD describes, in BoundaryDefinitions in an application content description file, method artifact information of an abstract method defined in a node type of a resource node in the resource package and a correspondence between a method artifact and an abstract method that is in the resource description file.

In this embodiment, the abstract method of the resource package is an abstract method defined in the node type of the resource node, and is presented to a user by using the BoundaryDefinitions. The method artifact information for the abstract method is also described in the BoundaryDefinitions in the application content description file, that is, the correspondence between the method artifact and the abstract method that is in the resource node in the resource description file in the resource package is described in the boundary definition (BoundaryDefinitions) in the application content description file.

The AD describes, in the BoundaryDefinitions in the foregoing application content description file, the resource method artifact (that is, connectMonitor.py) of the abstract method startMonitor that is defined by the resource nodes (that is, Apache and MySql). In this embodiment, the method artifact is described in the BoundaryDefinitions by using the following method. Specifically, an optional manner is using a method artifact set ImplementationArtifacts in the BoundaryDefinitions, and is described as follows:

```
           <BoundaryDefinitions>
             <ImplementationArtifacts>
               <ImplementationArtifact name="string" interfaceName="string"
 operationName="string" artifactType="string" artifactRef="string" />
             </ImplementationArtifacts >
           .... //Another definition
           </BoundaryDefinitions>
```

The ImplementationArtifacts in the BoundaryDefinitions can define multiple ImplementationArtifacts. Each ImplementationArtifact describes information about one method artifact. The ImplementationArtifact has five attributes, where a name attribute is an ID of the ImplementationArtifact; interfaceName is an interface name, in the BoundaryDefinitions in the resource description file, of an abstract method corresponding to the described method artifact; operationName is a method name, in the BoundaryDefinitions in the resource description file, of a method corresponding to the described method artifact; artifactType is a type of the method artifact. The type of the method artifact includes a file type of a script file of the method artifact, for example, a type of a method artifact of a Python script is "http://docs.oasisopen.org/tosca/ns/ScriptArtifact/Python"; and artifactRef is a name of a referenced method artifact.

As a specific example, in the BoundaryDefinitions in the application content description file, the method artifact connectMonitor.py may be described as follows:

```
           <BoundaryDefinitions>
              <ImplementationArtifacts>
                 <ImplementationArtifact name="startMonitorIA_MySql"
 interfaceName="monitor_boundary" operationName="startMonitor MySql"
 artifactType="http://docs.oasisopen.org/tosca/ns/ScriptArtifact/Python"
 artifactRef "connectMonitor.py"/>
                 <ImplementationArtifact name="startMonitorIA_Apache"
 interfaceName="monitor_boundary" operationName="startMonitor_Apache"
 artifactType="http://docs.oasisopen.org/tosca/ns/ScriptArtifact/Python"
 artifactRef="connectMonitor.py"/>
              </ImplementationArtifacts>
           .... //Another definition
           </BoundaryDefinitions>
```

An abstract method, corresponding to connectMonitor.py, in the resource description file is startMonitor. An interface name and a method name, in the BoundaryDefinitions in the resource description file, of startMonitor in the node template of the node MySql are monitor_boundary and startMonitor_MySql respectively. Therefore, for the ImplementationArtifact of the abstract method startMonitor of the node MySql, values of an interfaceName attribute and an operationName attribute are monitor_boundary and startMonitor MySql respectively; because connectMonitor.py is a Python script, a value of an artifactType attribute is "http://docs.oasisopen.org/tosca/ns/ScriptArtifact/Python", and a value of an artifactRef attribute is connectMonitor.py (directly citing the program file). The ImplementationArtifact of the abstract method startMonitor of the node Apache is similar, which is not described herein again.

505: The AD adds the foregoing created application content description file, deployment artifacts app.war and app.db, and a method artifact connectMonitor.py corresponding to an abstract method startMonitor to an application deployment request, and send the application deployment request to an application deployment server, where the application deployment request further includes the resource package identifier.

The AD describes, in the boundary definition in the application content description file, the method artifact information of connectMonitor.py and the correspondence between the method artifact connectMonitor.py provided by the AD and the abstract method startMonitor in the resource package. In this embodiment, the abstract method is included in the resource node, the application content description file describes a correspondence between the method artifact and the abstract method startMonitor in the resource node. During specific implementation, if the resource package has the abstract method included in the abstract application node, the AD further needs to provide an application method artifact corresponding to the abstract method of the abstract application node, and to describe, in the application content description file, a correspondence between the application method artifact and the abstract method in the abstract application node.

506: The application deployment server receives the application deployment request sent by the AD, and acquires the resource package according to the resource package identifier carried in the request.

The application deployment server receives the application deployment request sent by the AD, where the application deployment request includes at least the resource package identifier of the resource package, at least one method artifact, a correspondence between each method artifact and each abstract method that is in the resource description file in the resource package, and method artifact information of each method artifact. As an example, the method artifact information of each method artifact and the correspondence between each method artifact and each abstract method that is in the resource description file in the resource package are included in the application content description file.

For example, in this embodiment, details are described in the following:
the ID of the resource package: MoniRes;
the deployment artifacts of the application nodes: app.war and app.db;
the application method artifact: because the abstract application node in this embodiment has no method, the application content package does not include an application method artifact;
the resource method artifact: connectMonitor.py; and
the application content description file in FIG. 6C.

The application content description file describes the following information:
the deployment artifact information of the application nodes: for the deployment artifact app.war of the application node AppWar and the deployment artifact app.db of the application node DB, the application content description file describes information about the deployment artifacts; application method artifact information of the application nodes: because the abstract application nodes in this embodiment have no method, the application content description file does not include application method artifact information of the application nodes;
a correspondence between the application nodes and the application nodes in the resource description file: the application nodes AppWar and DB are corresponding to the abstract application nodes War_A and DB_A respectively (which is reflected in that the NodeTypes of the application nodes AppWar and DB include the NodeTypes of the application nodes War_A and DB_A respectively);
the correspondence between the method artifact and the abstract method of the resource node in the resource package: the resource method artifact connectMonitor.py is corresponding to the abstract method startMonitor of the resource nodes Apache and MySql (in this embodiment, TOSCA is used for description, and in the BoundaryDefinitions, the abstract method startMonitor needs to be described in a new Interface and a new Operation; therefore, the method artifact connectMonitor.py is corresponding to the Interface and the Operation that are corresponding to the abstract method startMonitor in the BoundaryDefinitions); and
the resource package acquired by the application deployment server according to the ID of the resource package: the resource package acquired by the application deployment server includes the resource description file and the deployment plan. The resource description file describes the application topology, the abstract application nodes, the resource nodes, and the deployment plan that can be supported by the resource package, where the resource node defines the abstract method, and the deployment plan uses the abstract method.

For example, in this embodiment, the following are described:
the deployment plan: reference is made to FIG. 6B, where:
   in addition, the resource description file may further include a referenced deployment artifact and a referenced method artifact, which are mainly a deployment artifact of the resource node and a method artifact of a non-abstract method, and have little to do with the procedure in this embodiment; therefore, details are not described herein again;
   the application topology: reference is made to FIG. 6A;
   the application nodes: War_A and DB_A; and
   the resource nodes: Apache and MySql, where:
      the application nodes and/or the resource nodes define the abstract methods: the abstract application nodes in this embodiment do not define a method, and the resource nodes Apache and MySql separately define one abstract method named startMonitor; and
      the deployment plan uses the abstract method: reference is made to FIG. 6B; the abstract method named startMonitor is used in the sixth step and the seventh step of the deployment plan (that is, BuildPlan).

507: Use the deployment artifact of the application node in the application deployment request as a deployment artifact of the application node in the resource description file.

Specifically, the deployment artifact information is added to the resource description file. Further, the application deployment server may further add the deployment artifact of the application node in the application deployment request to the resource package.

The application deployment server copies the deployment artifact information, described in the application content description file, of the application node to the node type implementation NodeTypeImplementation, corresponding to the abstract application node, in the resource description file of the resource package, and uses the information as deployment artifact information of the abstract application node.

Specifically, referring to FIG. 6C, the NodeTypes (WebApp and AppDB) of the application nodes AppWar and DB include the NodeTypes (WebApp_A and DB_A) of the application nodes War_A and DB_A respectively, and the deployment artifact information of the node types WebApp and AppDB is described in the corresponding NTI (that is, WebAppNTI and AppDBNTI). Therefore, only nodeType attributes of WebAppNTI and AppDBNTI need to be modified in the resource description file of the resource package into WebApp_A and AppDB A (that is, indicating that WebAppNTI and AppDBNTI are NTI of WebApp_A and AppDB_A respectively), and then attributes of WebApp_A and AppDB_A are modified into ordinary nodes. A modification manner may be, for example, deleting abstract attributes of WebApp_Aand AppDB_A, for example, deleting the entire abstract=yes; or modifying the abstract attributes into no, for example, modifying abstract=yes into abstract=no, which indicates that the abstract application nodes War_A and DB_A in the original resource package already have deployment artifacts, and therefore, become ordinary nodes.

508: Add the method artifact information to the resource description file according to the correspondence between each method artifact and each abstract method that is in the resource description file in the resource package, to form an application deployment description file.

The application deployment server processes the abstract method of the resource node in the resource package in the following manner: adding the method artifact information of the abstract method to the resource description file according to the correspondence between the method artifact and the abstract method that is included in the resource node, to form the application deployment description file; and modifying an attribute of the abstract method into an ordinary method, where further, the method artifact of the abstract method may be added to the resource package. The adding the method artifact information of the abstract method to the resource description file, to form the application deployment description file is specifically: adding the correspondence between the method artifact described in the boundary definition in the application content description file and the abstract method of the resource node in the resource description file in the resource package to NTI of the resource node in the resource description file.

Specifically, the abstract method startMonitor of the resource node in the resource package is defined in the NodeType of the resource node, and is presented, in the BoundaryDefinitions, to a user by using the new Interface and Operation, and a description, in the BoundaryDefinitions, of the method artifact connectMonitor.py of the resource node in the application deployment request is corresponding to the Interface and the Operation that are corresponding to the abstract method startMonitor in the BoundaryDefinitions. Therefore, a specific processing procedure is as follows:

Step 1: Acquire values of interfaceName and operationName of the ImplementationArtifact in the BoundaryDefinitions in the application deployment request (or the application content description file in the application deployment request).

Step 2: Search the BoundaryDefinitions in the resource description file for a NodeOperation. Values of Interface name and Operation ,name of the found NodeOperation are respectively equal to the values of Interface name and Operation name that are acquired from the application deployment request.

Step 3: Acquire values of nodeRef, interfaceName, and operationName of the NodeOperation.

Step 4: Copy all information about the ImplementationArtifact in the BoundaryDefinitions in the application deployment request to an ImplementationArtifacts entry in NTI of a NodeType of a node, whose node name is the acquired value of nodeRef, in the resource description file, and modify the values of attributes interfaceName and operationName in the ImplementationArtifact in the NTI into the values of interfaceName and operationName of the NodeOperation.

Step 5: Delete an abstract attribute of the abstract method in the node type of the resource node, or modify a value of abstract attribute of the abstract method in the node type of the resource node, where a node name of the abstract method is the value of nodeRef acquired in step 3, an interface name is the value of interfaceName acquired in step 3, and a method name is the value of operationName acquired in step 3.

The following describes a specific process of processing the abstract method startMonitor in MySql, which is similar to a specific process of processing the abstract method startMonitor in Apache.

For a description, in the BoundaryDefinitions, of the abstract method startMonitor of MySql in the resource package, reference may be made to the foregoing descriptions, and the description, in the BoundaryDefinitions, of the resource method artifact connectMonitor.py in the application content package has also been provided in the foregoing descriptions.

Step 1: Acquire values of interfaceName and operationName of the ImplementationArtifact in the application deployment request (or the application content description file in the application deployment request), which are monitor_boundary and startMonitor_MySql respectively.

Step 2: Acquire a NodeOperation, where values of attributes Interface name and Operation name of the NodeOperation are monitor_boundary and startMonitor_MySql respectively, and an example of the NodeOperation is as follows:

```
           <NodeOperation nodeRef="MySql" interfaceName="monitor"
 operationName="startMonitor"/>
```

Step 3: Acquire values of attributes nodeRef, interfaceName, and operationName of the NodeOperation, which are MySql, monitor, and startMonitor respectively.

Step 4: Copy all information about the ImplementationArtifact in the application deployment request to the NTI (that is, ApacheServerNTI) of the NodeType (that is, ApacheServer) of MySql, and then modify values of attributes interfaceName and operationName of the ImplementationArtifact into monitor and startMonitor respectively.

Step 5: Delete an abstract attribute of the method startMonitor in an interface "monitor" in MySql, or modify a value of an abstract attribute, for example, modify abstract=yes into abstract=no.

This embodiment is described by using an example in which the abstract method is included in the node type of the resource node. When the abstract method is included in the node type of the abstract application node, the correspondence between the method artifact and the abstract method that is in the resource description file in the resource package is described in the node type implementation NTI of the application node. In addition, in this case, the adding the method artifact information of the abstract method to the resource description file, to form the application deployment description file is specifically: adding NTI of an application node, in the application content description file, corresponding to the abstract application node to the resource description file, to form the application deployment description file.

509: The application deployment server executes, according to the application deployment description file, a method artifact of an abstract method referenced by a deployment plan.

For example, in this embodiment, the application deployment server copies the deployment artifacts (that is, app.war and app.db) of the application content package and the resource method artifact (that is, connectMonitor.py) to the resource package. An application deployment package is generated according to the application deployment description file, the resource package including the method artifact of the abstract method, and the deployment plan, where the application deployment package includes the deployment plan, the application deployment description file, and the method artifact of the abstract method.

In this embodiment, after finding a resource package MoniRes for a to-be-deployed application, an AD learns, according to a description of an abstract method in a resource description file in the resource package, that a demand of the AD can be met provided that a process of establishing a connection to third-party monitoring is implemented by using a program and that the program file (connectMonitor.py) is used as a method artifact of an abstract method startMonitor of a node Apache and a node MySql. An abstract method is set in a resource package, a demand of a user deploying an application can be met provided that the user provides a method artifact corresponding to the abstract method, which, compared with the prior art, improves expansibility of application deployment.

It should be noted that, this embodiment of the present invention further provides an optional solution, that is, after acquiring the resource package identifier of the resource package of the to-be-deployed application and acquiring the resource description file of the resource package according to the resource package identifier, the AD may further generate, according to an ordinary method described in the resource description file, a method artifact corresponding to the ordinary method, method artifact information of the method artifact, and a correspondence between each method artifact and one ordinary method in the resource description file, and add information generated by the AD to the application deployment request, so that when executing, according to the application deployment description file, the method artifact of the ordinary method referenced by the deployment plan, the application deployment server executes the method artifact sent by the AD.

Specifically, the AD may add, to the application deployment request by using the method shown in FIG. 3 to FIG. 5, the method artifact information of the method artifact and the correspondence between each method artifact and one ordinary method in the resource description file. If the method artifact of the ordinary method is a method artifact of the application node, the AD may add, to NTI of the application node, the method artifact information and the correspondence between the method artifact and the method that is of the application node in the resource description file. If the method artifact of the ordinary method is a method artifact of the resource node, the AD may add, to the boundary definition of the application content description file, the method artifact information and the correspondence between the method artifact and the method that is of the resource node in the resource description file.

After receiving the application deployment request sent by the AD, the application deployment server may determine, according to the application deployment request, whether the method artifact sent by the AD is specific to the method artifact of the abstract method in the resource description file or to the method artifact of the ordinary method in the resource description file. If the method artifact sent by the AD is specific to the method artifact of the abstract method in the resource description file, the application deployment server performs processing according to related steps in the embodiments corresponding to FIG. 2 to FIG. 5. If the method artifact sent by the AD is specific to the method artifact of the ordinary method in the resource description file, the application deployment server needs to first delete the method artifact of the ordinary method in the resource package, and then uses a method artifact of the ordinary method carried in the application deployment request as the method artifact of the ordinary method in the resource description file. Further, the application deployment server may further delete the method artifact information of the ordinary method in the resource description file, and add method artifact information of the ordinary method in the application deployment request to a resource description file. For a specific method for adding the method artifact information of the ordinary method in the application deployment request to the resource description file, reference may be made to corresponding descriptions in the embodiments corresponding to FIG. 3 to FIG. 5, which is not described in detail again in this embodiment of the present invention. As another optional manner, the method artifact of the ordinary method in the application deployment request and the method artifact of the ordinary method in the resource package may be the same in name, and may further be the same in information about the method artifacts; then the application deployment server may directly use the method artifact of the ordinary method in the application deployment request as the method artifact that needs to be executed during application deployment.

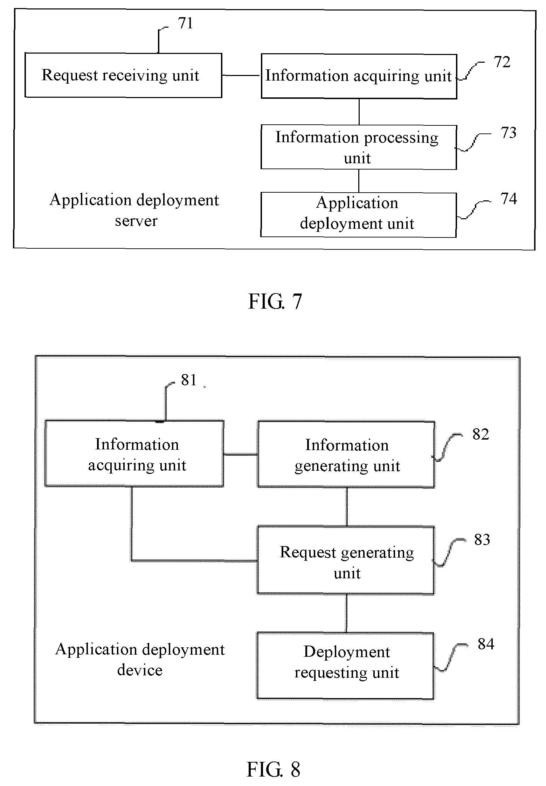

FIG. 7 is a schematic structural diagram of an application deployment server according to an embodiment of the present invention. The server may execute the method according to any embodiment of the present invention. As shown in FIG. 7, the server may include a request receiving unit 71, an information acquiring unit 72, an information processing unit 73, and an application deployment unit 74.

The request receiving unit 71 is configured to receive an application deployment request, where the application deployment request includes a resource package identifier of a resource package, at least one method artifact, a correspondence between each method artifact and each abstract method that is described in a resource description file in the resource package, and method artifact information of each method artifact.

The information acquiring unit 72 is configured to acquire the resource package according to the resource package identifier that is included in the application deployment request received by the request receiving unit 71, where the resource package includes the resource description file and a deployment plan, the resource description file describes the abstract method, and the deployment plan references the abstract method.

The information processing unit 73 is configured to: according to the correspondence that is included in the application deployment request received by the request receiving unit 71 and that is between each method artifact and each abstract method that is described in the resource description file in the resource package, add the method artifact information to the resource description file that is included in the resource package acquired by the information acquiring unit 72, to form an application deployment description file.

The application deployment unit 74 is configured to execute, according to the application deployment description file formed by the information processing unit 73, the method artifact of the abstract method referenced by the deployment plan.

Further, the resource description file further describes an application node and a resource node, and a description of the abstract method is included in a node type of the application node and/or the resource node.

Further, the abstract method is included in the node type of the application node, the application deployment request includes node type implementation NTI of the application node, and the correspondence between the method artifact and the abstract method that is described in the resource description file in the resource package is described in the node type implementation NTI of the application node; and that the information processing unit 73 adds the method artifact information to the resource description file that is included in the resource package acquired by the information acquiring unit 72 is specifically: adding the NTI of the application node to the resource description file; or
the abstract method is included in the node type of the resource node, the application deployment request includes a boundary definition, and the correspondence between the method artifact and the abstract method that is described in the resource description file in the resource package is described in the boundary definition; and that the information processing unit 73 adds the method artifact information to the resource description file that is included in the resource package acquired by the information acquiring unit 72 is specifically: adding the method artifact information described in the boundary definition to NTI of the resource node in the resource description file.

Further, the information processing unit 73 is further configured to modify an attribute of the abstract method into an ordinary method, where the abstract method is described in the node type in the resource description file that is included in the resource package acquired by the information acquiring unit 72; and/or add the method artifact included in the application deployment request that is received by the request receiving unit 71 to the resource package.

Further, the application deployment request further includes a deployment artifact of the application node; and after the information acquiring unit 72 acquires the resource package according to the resource package identifier, the information processing unit 73 is further configured to use the deployment artifact of the application node in the application deployment request that is received by the request receiving unit 71 as a deployment artifact of the application node in the resource description file that is included in the resource package acquired by the information acquiring unit 72.

Further, the application deployment request further includes deployment artifact information of the deployment artifact; and that the information processing unit 73 uses the deployment artifact of the application node in the application deployment request that is received by the request receiving unit 71 as a deployment artifact of the application node in the resource description file that is included in the resource package acquired by the information acquiring unit 72 is specifically: adding the deployment artifact information to the resource description file; and adding the deployment artifact of the application node in the application deployment request to the resource package.

Further, before adding the method artifact information included in the application deployment request that is received by the request receiving unit 71 to the resource description file that is included in the resource package acquired by the information acquiring unit 72, to form the application deployment description file, the information processing unit 73 is further configured to determine that a method, marked by using an abstract identification keyword, in the resource description file is the abstract method.

FIG. 8 is a schematic structural diagram of an application deployment device according to an embodiment of the present invention. The device may execute the method according to any embodiment of the present invention. The device is, for example, an AD. As shown in FIG. 8, the device may include an information acquiring unit 81, an information generating unit 82, a request generating unit 83, and a deployment requesting unit 84.

The information acquiring unit 81 is configured to acquire a resource package identifier of a resource package of a to-be-deployed application, and acquire a resource description file of the resource package according to the resource package identifier, where the resource description file describes at least one abstract method.

The information generating unit 82 is configured to generate, according to the at least one abstract method described in the resource description file that is acquired by the information acquiring unit 81, a method artifact corresponding to each abstract method, method artifact information of the method artifact, and a correspondence between each method artifact and each abstract method that is described in the resource description file.

The request generating unit 83 is configured to generate an application deployment request, where the application deployment request includes the resource package identifier acquired by the information acquiring unit 81, the correspondence between each method artifact generated by the information generating unit 82 and one abstract method described in the resource description file that is acquired by the information acquiring unit 81, the method artifact information of each method artifact, and the method artifact.

The deployment requesting unit 84 is configured to send the application deployment request generated by the request generating unit 83 to an application deployment server.

Further, that the information acquiring unit 81 acquires a resource description file of the resource package according to the resource package identifier is specifically: sending a resource package acquiring request to the application deployment server, where the resource package acquiring request carries the resource package identifier; and receiving the resource package that is sent by the application deployment server and that is corresponding to the resource package identifier, and acquiring the resource description file from the resource package; or sending a resource description file acquiring request to the application deployment server, where the resource description file acquiring request carries the resource package identifier of the resource package to which the resource description file belongs; and receiving the resource description file included in the resource package that is sent by the application deployment server and that is corresponding to the resource package identifier.

Further, the resource description file describes an application node, and the abstract method is included in a node type of the application node; that the information generating unit 82 generates, according to the at least one abstract method described in the resource description file that is acquired by the information acquiring unit 81, a method artifact corresponding to each abstract method is specifically: generating, according to the abstract method, included in the node type of the application node, in the resource description file, the method artifact corresponding to the abstract method of the application node; the request generating unit 83 is further configured to describe, in the application deployment request, the application node according to the application node described in the resource description file that is acquired by the information acquiring unit 81; and the method artifact information and the correspondence between the method artifact and the abstract method that is in the resource description file are described in node type implementation NTI of the application node that is described in the application deployment request.

Further, the resource description file further describes a resource node, and the abstract method is included in a node type of the resource node; that the information generating unit 82 generates, according to the at least one abstract method described in the resource description file that is acquired by the information acquiring unit 81, a method artifact corresponding to each abstract method is specifically: generating, according to the abstract method, included in the node type of the resource node, in the resource description file, the method artifact corresponding to the abstract method of the resource node; and the method artifact information and the correspondence between the method artifact and the abstract method that is in the resource description file are described in a boundary definition in the application deployment request.

Further, before the deployment requesting unit 84 sends the application deployment request generated by the request generating unit 83 to the application deployment server, the information generating unit 82 generates a deployment artifact of the application node and deployment artifact information of the deployment artifact according to the resource description file, where the application deployment request further includes the deployment artifact of the application node and the deployment artifact information of the deployment artifact.

Further, before generating the deployment artifact of the application node and the deployment artifact information of the deployment artifact according to the resource description file, the information generating unit 82 is further configured to determine that the application node in the resource description file acquired by the information acquiring unit 81 is marked by using an abstract identification keyword, and that the resource description file does not include deployment artifact information of the application node.

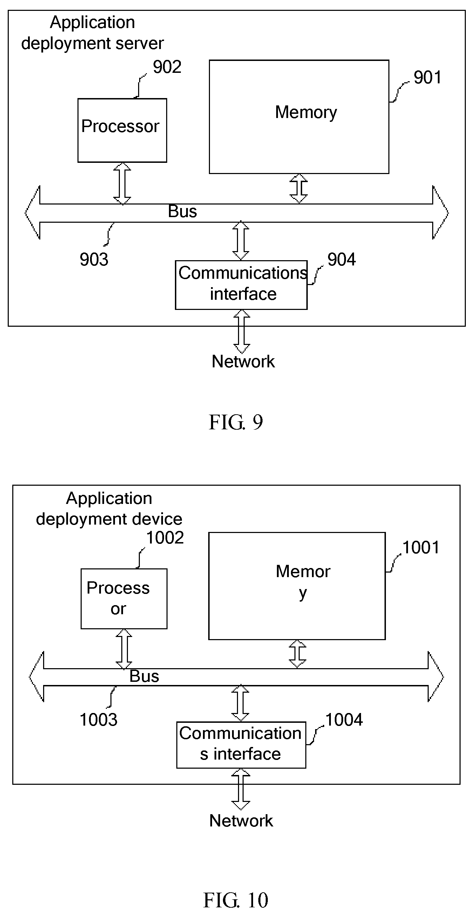

FIG. 9 is a schematic diagram of a physical structure of an application deployment server according to an embodiment of the present invention. The application deployment server is configured to implement the application deployment method according to the embodiments of the present invention, and for a working principle thereof, reference may be made to the foregoing method embodiments. As shown in FIG. 9, the application deployment server may include a memory 901, a processor 902, a bus 903, and a communications interface 904. The processor 902, the memory 901, and the communications interface 904 are connected and communicate with each other by using the bus 903. The processor 902 may be a single-core or multi-core central processing unit (central processing unit, CPU for short), or an application-specific integrated circuit (application specific integrated circuit, ASIC for short), or may be configured as one or more integrated circuits implementing this embodiment of the present invention. The memory 901 may be a high-speed RAM memory, or may be a non-volatile memory (non-volatile memory), for example, at least one disk memory.

The communications interface 904 is configured to communicate with an external device and receive an application deployment request, where the application deployment request includes a resource package identifier of a resource package, at least one method artifact, a correspondence between each method artifact and each abstract method that is described in a resource description file in the resource package, and method artifact information of each method artifact.

The memory 901 stores an application program. The processor 902 invokes the application program stored in the memory 901; acquires the resource package according to the resource package identifier, where the resource package includes the resource description file and a deployment plan, the resource description file describes the abstract method, and the deployment plan references the abstract method; adds the method artifact information to the resource description file according to the correspondence between each method artifact and each abstract method that is described in the resource description file in the resource package, to form an application deployment description file; and executes, according to the application deployment description file, the method artifact of the abstract method referenced by the deployment plan.

Further, the resource description file further describes an application node and a resource node, and a description of the abstract method is included in a node type of the application node and/or the resource node.

Further, the abstract method is included in the node type of the application node, the application deployment request includes node type implementation NTI of the application node, and the correspondence between the method artifact and the abstract method that is described in the resource description file in the resource package is described in the node type implementation NTI of the application node; that the processor 902 adds the method artifact information to the resource description file is specifically: adding the NTI of the application node to the resource description file; or the abstract method is included in the node type of the resource node, the application deployment request includes a boundary definition, and the correspondence between the method artifact and the abstract method that is described in the resource description file in the resource package is described in the boundary definition; and that the processor 902 adds the method artifact information to the resource description file is specifically: adding the method artifact information described in the boundary definition to NTI of the resource node in the resource description file.

Further, the processor 902 is further configured to modify an attribute of the abstract method in the node type in the resource description file into an ordinary method; and/or add the method artifact included in the application deployment request to the resource package.

Further, the application deployment request further includes a deployment artifact of the application node; the processor 902 is further configured to: after acquiring the resource package according to the resource package identifier, use the deployment artifact of the application node in the application deployment request as a deployment artifact of the application node in the resource description file.

Further, the application deployment request further includes deployment artifact information of the deployment artifact; that the processor 902 uses the deployment artifact of the application node in the application deployment request as a deployment artifact of the application node in the resource description file is specifically: adding the deployment artifact information to the resource description file; and adding the deployment artifact of the application node in the application deployment request to the resource package.

Further, before adding the method artifact information to the resource description file, to form the application deployment description file, the processor 902 is configured to determine that a method, marked by using an abstract identification keyword, in the resource description file is the abstract method.

FIG. 10 is a schematic diagram of a physical structure of an application deployment device according to an embodiment of the present invention. The application deployment device is configured to implement the application deployment method according to the embodiments of the present invention, and for a working principle thereof, reference may be made to the foregoing method embodiments. As shown in FIG. 10, the application deployment device may include a memory 1001, a processor 1002, a bus 1003, and a communications interface 1004. The processor 1002, the memory 1001, and the communications interface 1004 are connected and communicate with each other by using the bus 1003. The processor 1002 may be a single-core or multi-core central processing unit (central processing unit, CPU for short), or an application-specific integrated circuit (application specific integrated circuit, ASIC for short), or may be configured as one or more integrated circuits implementing this embodiment of the present invention. The memory 1001 may be a high-speed RAM memory, or may be a non-volatile memory (non-volatile memory), for example, at least one disk memory.

The communications interface 1004 is configured to communicate with an external device, acquire a resource package identifier of a resource package of a to-be-deployed application, and acquire a resource description file of the resource package according to the resource package identifier, where the resource description file describes at least one abstract method.

The memory 1001 stores an application program. The processor 1002 invokes the application program stored in the memory 1001, generates, according to the at least one abstract method described in the resource description file, a method artifact corresponding to each abstract method, method artifact information of the method artifact, and a correspondence between each method artifact and each abstract method that is described in the resource description file; and generates an application deployment request, where the application deployment request includes the resource package identifier, the correspondence between each method artifact and each abstract method that is in the resource description file, the method artifact information of each method artifact, and the method artifact. The communications interface 1004 is further configured to send the application deployment request to an application deployment server.

Further, that the processor 1002 acquires a resource description file of the resource package according to the resource package identifier is specifically: sending a resource package acquiring request to the application deployment server, where the resource package acquiring request carries the resource package identifier; and receiving the resource package that is sent by the application deployment server and that is corresponding to the resource package identifier, and acquiring the resource description file from the resource package; or sending a resource description file acquiring request to the application deployment server, where the resource description file acquiring request carries the resource package identifier of the resource package to which the resource description file belongs; and receiving the resource description file included in the resource package that is sent by the application deployment server and that is corresponding to the resource package identifier.

Further, the resource description file describes an application node, and the abstract method is included in a node type of the application node; that the processor 1002 generates, according to the at least one abstract method described in the resource description file, a method artifact corresponding to each abstract method is specifically: generating, according to the abstract method, included in the node type of the application node, in the resource description file, the method artifact corresponding to the abstract method of the application node; and the processor 1002 is further configured to describe, in the application deployment request, the application node according to the application node described in the resource description file, where the method artifact information and the correspondence between the method artifact and the abstract method that is described in the resource description file are described in node type implementation NTI of the application node that is described in the application deployment request.

Further, the resource description file further describes a resource node, and the abstract method is included in a node type of the resource node; and that the processor 1002 generates, according to the at least one abstract method described in the resource description file, a method artifact corresponding to each abstract method is specifically: generating, according to the abstract method, included in a description of the node type of the resource node, in the resource description file, the method artifact corresponding to the abstract method of the resource node, where the method artifact information and the correspondence between the method artifact and the abstract method that is described in the resource description file are described in a boundary definition in the application deployment request.

Further, before sending the application deployment request to the application deployment server, the processor 1002 is further configured to generate a deployment artifact of the application node and deployment artifact information of the deployment artifact, where the application deployment request further includes the deployment artifact of the application node and the deployment artifact information of the deployment artifact.

Further, before generating the deployment artifact of the application node and the deployment artifact information of the deployment artifact, the processor 1002 determines that the application node in the resource description file is marked by using an abstract identification keyword and that the resource description file does not include deployment artifact information of the application node.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An application deployment method, comprising:
receiving an application deployment request, wherein the application deployment request comprises a resource package identifier of a resource package, at least one method artifact, a correspondence between each method artifact and each abstract method that is described in a resource description file in the resource package, and method artifact information of each method artifact;
acquiring the resource package according to the resource package identifier, wherein the resource package comprises the resource description file and a deployment plan, the resource description file describes the abstract method, and the deployment plan references the abstract method;
adding the method artifact information to the resource description file according to the correspondence between each method artifact and each abstract method that is described in the resource description file in the resource package, to form an application deployment description file; and
executing, according to the application deployment description file, the method artifact corresponding to the abstract method referenced by the deployment plan.

2. The method according to claim 1, wherein the resource description file further describes an application node and a resource node; and
a description of the abstract method is comprised in a node type of the application node and/or the resource node.

3. The method according to claim 2, wherein the abstract method is comprised in the node type of the application node, the application deployment request comprises node type implementation NTI of the application node, and the correspondence between the method artifact and the abstract method that is described in the resource description file in the resource package is described in the node type implementation NTI of the application node; and the adding the method artifact information to the resource description file is specifically: adding the NTI of the application node to the resource description file; or
the abstract method is comprised in the node type of the resource node, the application deployment request comprises a boundary definition, and the correspondence between the method artifact and the abstract method that is described in the resource description file in the resource package is described in the boundary definition; and the adding the method artifact information to the resource description file is specifically: adding the method artifact information described in the boundary definition to NTI of the resource node in the resource description file.

4. The method according to claim 3, wherein the method further comprises:
modifying an attribute of the abstract method in the node type in the resource description file into an ordinary method; and/or
adding the method artifact comprised in the application deployment request to the resource package.

5. The method according to claim 3 or 4, wherein the application deployment request further comprises a deployment artifact of the application node; and after the acquiring the resource package according to the resource package identifier, the method further comprises:
using the deployment artifact of the application node in the application deployment request as a deployment artifact of the application node in the resource description file.

6. The method according to claim 5, wherein the application deployment request further comprises deployment artifact information of the deployment artifact, and the using the deployment artifact of the application node in the application deployment request as a deployment artifact of the application node in the resource description file is specifically:
adding the deployment artifact information to the resource description file; and
adding the deployment artifact of the application node in the application deployment request to the resource package.

7. The method according to any one of claims 1 to 6, before the adding the method artifact information to the resource description file, to form an application deployment description file, further comprising:
determining that a method, marked by using an abstract identification keyword, in the resource description file is the abstract method.

8. An application deployment method, comprising:
acquiring a resource package identifier of a resource package of a to-be-deployed application, and acquiring a resource description file of the resource package according to the resource package identifier, wherein the resource description file describes at least one abstract method;
generating, according to the at least one abstract method described in the resource description file, a method artifact corresponding to each abstract method, method artifact information of the method artifact, and a correspondence between each method artifact and each abstract method that is described in the resource description file;
generating an application deployment request, wherein the application deployment request comprises the resource package identifier, the correspondence between each method artifact and each abstract method that is in the resource description file, the method artifact information of each method artifact, and the method artifact; and
sending the application deployment request to an application deployment server.

9. The method according to claim 8, wherein the acquiring a resource description file of the resource package according to the resource package identifier comprises:
sending a resource package acquiring request to the application deployment server, wherein the resource package acquiring request carries the resource package identifier; and receiving the resource package that is sent by the application deployment server and that is corresponding to the resource package identifier, and acquiring the resource description file from the resource package; or
sending a resource description file acquiring request to the application deployment server, wherein the resource description file acquiring request carries the resource package identifier of the resource package to which the resource description file belongs; and receiving the resource description file comprised in the resource package that is sent by the application deployment server and that is corresponding to the resource package identifier.

10. The method according to claim 8 or 9, wherein the resource description file describes an application node, and the abstract method is comprised in a node type of the application node; the generating, according to the at least one abstract method described in the resource description file, a method artifact corresponding to each abstract method comprises:
generating, according to the abstract method, comprised in the node type of the application node, in the resource description file, the method artifact corresponding to the abstract method of the application node; and the method further comprises:
describing, in the application deployment request, the application node according to the application node described in the resource description file, wherein:
the method artifact information and the correspondence between the method artifact and the abstract method that is in the resource description file are described in node type implementation NTI of the application node that is described in the application deployment request.

11. The method according to any one of claims 8 to 10, wherein the resource description file further describes a resource node, and the abstract method is comprised in a node type of the resource node; and
the generating, according to the at least one abstract method described in the resource description file, a method artifact corresponding to each abstract method comprises: generating, according to the abstract method, comprised in the node type of the resource node, in the resource description file, the method artifact corresponding to the abstract method of the resource node, wherein:
the method artifact information and the correspondence between the method artifact and the abstract method that is in the resource description file are described in a boundary definition in the application deployment request.

12. The method according to claim 10, before the sending the application deployment request to an application deployment server, further comprising:
generating a deployment artifact of the application node and deployment artifact information of the deployment artifact according to the resource description file, wherein the application deployment request further comprises the deployment artifact of the application node and the deployment artifact information of the deployment artifact.

13. The method according to claim 12, wherein before the generating a deployment artifact of the application node and deployment artifact information of the deployment artifact according to the resource description file, the method further comprises:
determining that the application node in the resource description file is marked by using an abstract identification keyword, and that the resource description file does not comprise the deployment artifact information of the application node.

14. An application deployment server, comprising:
a request receiving unit, configured to receive an application deployment request, wherein the application deployment request comprises a resource package identifier of a resource package, at least one method artifact, a correspondence between each method artifact and each abstract method that is described in a resource description file in the resource package, and method artifact information of each method artifact;
an information acquiring unit, configured to acquire the resource package according to the resource package identifier that is comprised in the application deployment request received by the request receiving unit, wherein the resource package comprises the resource description file and a deployment plan, the resource description file describes the abstract method, and the deployment plan references the abstract method;
an information processing unit, configured to: according to the correspondence that is comprised in the application deployment request received by the request receiving unit and that is between each method artifact and each abstract method that is described in the resource description file in the resource package, add the method artifact information to the resource description file that is comprised in the resource package acquired by the information acquiring unit, to form an application deployment description file; and
an application deployment unit, configured to execute, according to the application deployment description file formed by the information processing unit, the method artifact corresponding to the abstract method referenced by the deployment plan.

15. The server according to claim 14, wherein the resource description file further describes an application node and a resource node; and
a description of the abstract method is comprised in a node type of the application node and/or the resource node.

16. The server according to claim 15, wherein the abstract method is comprised in the node type of the application node, the application deployment request comprises node type implementation NTI of the application node, and the correspondence between the method artifact and the abstract method that is described in the resource description file in the resource package is described in the node type implementation NTI of the application node; and that the information processing unit adds the method artifact information to the resource description file that is comprised in the resource package acquired by the information acquiring unit is specifically that the information process unit adds the NTI of the application node to the resource description file; or
the abstract method is comprised in the node type of the resource node, the application deployment request comprises a boundary definition, and the correspondence between the method artifact and the abstract method that is described in the resource description file in the resource package is described in the boundary definition; and that the information processing unit adds the method artifact information to the resource description file that is comprised in the resource package acquired by the information acquiring unit is specifically: adding the method artifact information described in the boundary definition to NTI of the resource node in the resource description file.

17. The server according to claim 16, wherein:
the information processing unit is further configured to modify an attribute of the abstract method into an ordinary method, wherein the abstract method is described in the node type in the resource description file that is comprised in the resource package acquired by the information acquiring unit; and/or add the method artifact comprised in the application deployment request that is received by the request receiving unit to the resource package.

18. The server according to claim 16 or 17, wherein the application deployment request further comprises a deployment artifact of the application node; and
after the information acquiring unit acquires the resource package according to the resource package identifier, the information processing unit is further configured to use the deployment artifact of the application node in the application deployment request that is received by the request receiving unit as a deployment artifact of the application node in the resource description file that is comprised in the resource package acquired by the information acquiring unit.

19. The server according to claim 18, wherein the application deployment request further comprises deployment artifact information of the deployment artifact; and
that the information processing unit uses the deployment artifact of the application node in the application deployment request that is received by the request receiving unit as a deployment artifact of the application node in the resource description file that is comprised in the resource package acquired by the information acquiring unit is specifically:
adding the deployment artifact information to the resource description file; and
adding the deployment artifact of the application node in the application deployment request to the resource package.

20. The server according to any one of claims 14 to 19, wherein before adding the method artifact information comprised in the application deployment request received by the request receiving unit to the resource description file that is comprised in the resource package acquired by the information acquiring unit, to form the application deployment description file, the information processing unit is further configured to determine that a method, marked by using an abstract identification keyword, in the resource description file is the abstract method.

21. An application deployment device, comprising:
an information acquiring unit, configured to acquire a resource package identifier of a resource package of a to-be-deployed application, and acquire a resource description file of the resource package according to the resource package identifier, wherein the resource description file describes at least one abstract method;
an information generating unit, configured to generate, according to the at least one abstract method described in the resource description file that is acquired by the information acquiring unit, a method artifact corresponding to each abstract method, method artifact information of the method artifact, and a correspondence between each method artifact and each abstract method that is described in the resource description file;
a request generating unit, configured to generate an application deployment request, wherein the application deployment request comprises the resource package identifier acquired by the information acquiring unit, the correspondence between each method artifact generated by the information generating unit and one abstract method described in the resource description file that is acquired by the information acquiring unit, the method artifact information of each method artifact, and the method artifact; and
a deployment requesting unit, configured to send the application deployment request generated by the request generating unit to an application deployment server.

22. The device according to claim 21, wherein that the information acquiring unit acquires a resource description file of the resource package according to the resource package identifier is specifically:
sending a resource package acquiring request to the application deployment server, wherein the resource package acquiring request carries the resource package identifier; and receiving the resource package that is sent by the application deployment server and that is corresponding to the resource package identifier, and acquiring the resource description file from the resource package; or
sending a resource description file acquiring request to the application deployment server, wherein the resource description file acquiring request carries the resource package identifier of the resource package to which the resource description file belongs; and receiving the resource description file comprised in the resource package that is sent by the application deployment server and that is corresponding to the resource package identifier.

23. The device according to claim 21 or 22, wherein the resource description file describes an application node, and the abstract method is comprised in a node type of the application node;
that the information generating unit generates, according to the at least one abstract method described in the resource description file that is acquired by the information acquiring unit, a method artifact corresponding to each abstract method is specifically: generating, according to the abstract method, comprised in the node type of the application node, in the resource description file, the method artifact corresponding to the abstract method of the application node;
the request generating unit is further configured to describe, in the application deployment request, the application node according to the application node described in the resource description file that is acquired by the information acquiring unit; and
the method artifact information and the correspondence between the method artifact and the abstract method that is in the resource description file are described in node type implementation NTI of the application node that is described in the application deployment request.

24. The device according to any one of claims 21 to 23, wherein the resource description file further describes a resource node, and the abstract method is comprised in a node type of the resource node;
that the information generating unit generates, according to the at least one abstract method described in the resource description file that is acquired by the information acquiring unit, a method artifact corresponding to each abstract method is specifically: generating, according to the abstract method, comprised in the node type of the resource node, in the resource description file, the method artifact corresponding to the abstract method of the resource node; and
the method artifact information and the correspondence between the method artifact and the abstract method that is in the resource description file are described in a boundary definition in the application deployment request.

25. The device according to claim 24, wherein before the deployment requesting unit sends the application deployment request generated by the request generating unit to the application deployment server, the information generating unit generates a deployment artifact of the application node and deployment artifact information of the deployment artifact according to the resource description file, wherein the application deployment request further comprises the deployment artifact of the application node and the deployment artifact information of the deployment artifact.

26. The device according to claim 21, wherein before generating the deployment artifact of the application node and the deployment artifact information of the deployment artifact according to the resource description file, the information generating unit is further configured to determine that an application node in the resource description file acquired by the information acquiring unit is marked by using an abstract identification keyword, and that the resource description file does not comprise deployment artifact information of the application node.

27. An application deployment server, comprising a communications interface, a processor, and a memory, wherein:
the communications interface is configured to communicate with an external device and receive an application deployment request, wherein the application deployment request comprises a resource package identifier of a resource package, at least one method artifact, a correspondence between each method artifact and each abstract method that is described in a resource description file in the resource package, and method artifact information of each method artifact;
the memory stores an application program; and
the processor invokes the application program stored in the memory; acquires the resource package according to the resource package identifier, wherein the resource package comprises the resource description file and a deployment plan, the resource description file describes the abstract method, and the deployment plan references the abstract method; adds the method artifact information to the resource description file according to the correspondence between each method artifact and each abstract method that is described in the resource description file in the resource package, to form an application deployment description file; and executes, according to the application deployment description file, the method artifact of the abstract method referenced by the deployment plan.

28. The server according to claim 27, wherein:
the resource description file further describes an application node and a resource node; and
a description of the abstract method is comprised in a node type of the application node and/or the resource node.

29. The server according to claim 28, wherein:
the abstract method is comprised in the node type of the application node, the application deployment request comprises node type implementation NTI of the application node, and the correspondence between the method artifact and the abstract method that is described in the resource description file in the resource package is described in the node type implementation NTI of the application node; and that the processor adds the method artifact information to the resource description file is specifically: adding the NTI of the application node to the resource description file; or
the abstract method is comprised in the node type of the resource node, the application deployment request comprises a boundary definition, and the correspondence between the method artifact and the abstract method that is described in the resource description file in the resource package is described in the boundary definition; and that the processor adds the method artifact information to the resource description file is specifically: adding the method artifact information described in the boundary definition to NTI of the resource node in the resource description file.

30. The server according to claim 29, wherein:
the processor is further configured to modify an attribute of the abstract method in the node type in the resource description file into an ordinary method; and/or add the method artifact comprised in the application deployment request to the resource package.

31. The server according to claim 29 or 30, wherein the application deployment request further comprises a deployment artifact of the application node; and
the processor is further configured to: after acquiring the resource package according to the resource package identifier, use the deployment artifact of the application node in the application deployment request as a deployment artifact of the application node in the resource description file.

32. The server according to claim 31, wherein the application deployment request further comprises deployment artifact information of the deployment artifact; and
that the processor uses the deployment artifact of the application node in the application deployment request as a deployment artifact of the application node in the resource description file is specifically: adding the deployment artifact information to the resource description file; and adding the deployment artifact of the application node in the application deployment request to the resource package.

33. The server according to any one of claims 27 to 32, wherein:
before adding the method artifact information to the resource description file, to form the application deployment description file, the processor is configured to determine that a method, marked by using an abstract identification keyword, in the resource description file is the abstract method.

34. An application deployment device, comprising a communications interface, a processor, and a memory, wherein:
the communications interface is configured to communicate with an external device, acquire a resource package identifier of a resource package of a to-be-deployed application, and acquire a resource description file of the resource package according to the resource package identifier, wherein the resource description file describes at least one abstract method;
the memory stores an application program;
the processor invokes the application program stored in the memory, generates, according to the at least one abstract method described in the resource description file, a method artifact corresponding to each abstract method, method artifact information of the method artifact, and a correspondence between each method artifact and each abstract method that is described in the resource description file; and generates an application deployment request, wherein the application deployment request comprises the resource package identifier, the correspondence between each method artifact and each abstract method that is in the resource description file, the method artifact information of each method artifact, and the method artifact; and
the communications interface is further configured to send the application deployment request to an application deployment server.

35. The device according to claim 34, wherein:
that the processor acquires a resource description file of the resource package according to the resource package identifier is specifically:
sending a resource package acquiring request to the application deployment server, wherein the resource package acquiring request carries the resource package identifier; and receiving the resource package that is sent by the application deployment server and that is corresponding to the resource package identifier, and acquiring the resource description file from the resource package; or
sending a resource description file acquiring request to the application deployment server, wherein the resource description file acquiring request carries the resource package identifier of the resource package to which the resource description file belongs; and receiving the resource description file comprised in the resource package that is sent by the application deployment server and that is corresponding to the resource package identifier.

36. The device according to claim 34 or 35, wherein the resource description file describes an application node, and the abstract method is comprised in a node type of the application node;
that the processor generates, according to the at least one abstract method described in the resource description file, a method artifact corresponding to each abstract method is specifically: generating, according to the abstract method, comprised in the node type of the application node, in the resource description file, the method artifact corresponding to the abstract method of the application node; and
the processor is further configured to:
describe, in the application deployment request, the application node according to the application node described in the resource description file, wherein:
the method artifact information and the correspondence between the method artifact and the abstract method that is described in the resource description file are described in node type implementation NTI of the application node that is described in the application deployment request.

37. The device according to any one of claims 34 to 36, wherein the resource description file further describes a resource node, and the abstract method is comprised in a node type of the resource node; and
that the processor generates, according to the at least one abstract method described in the resource description file, a method artifact corresponding to each abstract method is specifically:
generating, according to the abstract method, comprised in the node type of the resource node, in the resource description file, the method artifact corresponding to the abstract method of the resource node, wherein:
the method artifact information and the correspondence between the method artifact and the abstract method that is in the resource description file are described in a boundary definition in the application deployment request.

38. The device according to claim 36, wherein:
before sending the application deployment request to the application deployment server, the processor is further configured to generate a deployment artifact of the application node and deployment artifact information of the deployment artifact according to the resource description file, wherein the application deployment request further comprises the deployment artifact of the application node and the deployment artifact information of the deployment artifact.

39. The device according to claim 38, wherein:
the processor determines, before generating the deployment artifact of the application node and the deployment artifact information of the deployment artifact according to the resource description file, that the application node in the resource description file is marked by using an abstract identification keyword, and that the resource description file does not comprise the deployment artifact information of the application node.
